(19) **Europäisches Patentamt**
**European Patent Office**
**Office européen des brevets**

(11) **EP 4 647 809 A1**

(12) **EUROPEAN PATENT APPLICATION**
published in accordance with Art. 153(4) EPC

(43) Date of publication:
**12.11.2025 Bulletin 2025/46**

(21) Application number: **24749559.1**

(22) Date of filing: **22.01.2024**

(51) International Patent Classification (IPC):
*G01S 13/88* (2006.01)

(52) Cooperative Patent Classification (CPC):
**B60Q 9/00; B60R 21/015; G01S 13/88**

(86) International application number:
**PCT/CN2024/073424**

(87) International publication number:
**WO 2024/160078 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.02.2023 CN 202310149338**

(71) Applicant: **Huawei Technologies Co., Ltd.**
**Shenzhen, Guangdong 518129 (CN)**

(72) Inventors:
• **DING, Genming**
**Shenzhen, Guangdong 518129 (CN)**
• **LI, Jinjin**
**Shenzhen, Guangdong 518129 (CN)**
• **CHEN, Zhikai**
**Shenzhen, Guangdong 518129 (CN)**
• **XU, Guangcheng**
**Shenzhen, Guangdong 518129 (CN)**
• **SHEN, Qi**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **LIVING BODY DETECTION METHOD AND RELATED DEVICE**

(57)    A living body detection method and a related apparatus are provided. A method for detecting a living body in a cabin of a vehicle (100) by using a radar apparatus is provided. Through implementation of the method, after a vehicle owner leaves, the vehicle (100) can autonomously detect whether a living body exists in the vehicle (100). In addition, the radar apparatus (110) may be integrated into a central control display (102) to reduce wiring in the vehicle (100). The vehicle (100) can detect living bodies at different distances from the radar apparatus (110), and eliminate interference such as vehicle body shaking and ornament shaking. The vehicle (100) may further send a detection result to an electronic device (120) of the vehicle owner. In this way, the vehicle (100) can notify the vehicle owner in a timely manner when detecting that a living body exists in the cabin, thereby ensuring life safety of a child or pet left in the vehicle.

EP 4 647 809 A1

In-vehicle infotainment system 101

Vehicle body control system 103

Engine 104

Central control display 102

Radar apparatus 110

Electronic device 120

S601: Receive a door closing signal

S602: Receive a turn-off signal

S603: Send a living body detection instruction

S604: Start a radar apparatus

S605: The radar apparatus transmits a radar signal, receives an echo signal, and generates an intermediate-frequency signal based on the transmitted radar signal and the echo signal

S606: Process the intermediate-frequency signal

S607: Send a processed intermediate-frequency signal

S608: Determine, based on the processed intermediate-frequency signal, that a living body exists in a vehicle

S609: Send living body leaving-behind information

FIG. 6

**Description**

This application claims priority to Chinese Patent Application No. 202310149338.2, filed with the China National Intellectual Property Administration on February 3, 2023 and entitled "LIVING BODY DETECTION METHOD AND RELATED APPARATUS", which is incorporated herein by reference in its entirety.

**TECHNICAL FIELD**

This application relates to the field of intelligent vehicle technologies, and in particular, to a living body detection method and a related apparatus.

**BACKGROUND**

After a vehicle is turned off, a vehicle owner may neglect a child or pet in the vehicle, causing accidents such as injury or death of the child or pet to occur from time to time. Especially when the vehicle owner leaves the vehicle, if the child or pet left in the vehicle is in deep sleep, the vehicle owner is more likely to forget the child or pet. Therefore, the vehicle needs to detect a living body in the vehicle in a timely manner after the vehicle is turned off. In this way, when there is a living body in the vehicle, the vehicle owner can be notified in a timely manner, to ensure life safety of the child or pet left in the vehicle.

**SUMMARY**

This application provides a living body detection method and a related apparatus. After a vehicle owner leaves, a vehicle can autonomously detect whether a living body exists in the vehicle. A radar apparatus may be integrated into a central control display to reduce wiring in the vehicle. To adapt to a problem of insufficient computational amount of the central control display, the central control display may process a signal sent and received by the radar apparatus and then send the signal to an in-vehicle infotainment system, and the in-vehicle infotainment system determines whether a living body exists in the vehicle. Finally, the in-vehicle infotainment system may send a detection result to an electronic device of the vehicle owner. In this way, the vehicle can notify the vehicle owner in a timely manner when detecting that a living body exists in a cabin, thereby ensuring life safety of a child or pet left in the vehicle.

According to a first aspect, this application provides a living body detection method. The method may be applied to a vehicle, and the vehicle may include a display device and a first device. The display device may include a radar apparatus. The method may include: The vehicle transmits a radar signal by using the radar apparatus, and receives an echo signal. The display device in the vehicle obtains N1 frames of intermediate-frequency signals based on the radar signal and the echo signal. One of the N1 frames of intermediate-frequency signals may include N2 intermediate-frequency signals. One of the N2 intermediate-frequency signals may be obtained based on one radar signal transmitted by the radar apparatus and an echo signal of the radar signal. Both N1 and N2 are positive integers. The display device in the vehicle may obtain first data based on M intermediate-frequency signals of the N1 frames of intermediate-frequency signals. M may be a positive integer less than N1*N2. The first data may include amplitudes and/or phases, in frequency domain, of the M intermediate-frequency signals. The display device in the vehicle may send the first data to the first device. The first device in the vehicle may determine, based on the first data, that a living body exists in the vehicle.

The radar apparatus may divide N2 radar signals into one frame. The radar apparatus may send N1 frames of radar signals, and receive echo signals of the N1 frames of radar signals. The radar apparatus may obtain an intermediate-frequency signal based on an echo signal corresponding to each radar signal. In this way, the radar apparatus may obtain N1*N2 intermediate-frequency signals in total. A microprocessor in the display device may obtain the first data from M intermediate-frequency signals of the N1*N2 intermediate-frequency signals. The first data may be sampling points at different frequencies obtained by performing a Fourier transform on the M intermediate-frequency signals by the microprocessor in the display device. The sampling points at different frequencies may also be referred to as range-bins. The range-bin may include amplitude and/or phase information of the M intermediate-frequency signals at different frequency sampling points. An amplitude of an intermediate-frequency signal at one frequency sampling point may be referred to as an amplitude of one range-bin. A phase of an intermediate-frequency signal at one frequency sampling point may be referred to as a phase of one range-bin. The first device in the vehicle may determine, based on a feature of the first data, that a living body exists in the vehicle. The feature of the first data may be a time-domain feature and/or a frequency-domain feature of the first data.

It may be understood that the display device in the vehicle may select N1*N2 intermediate-frequency signals, and select M intermediate-frequency signals from the N1*N2 intermediate-frequency signals to obtain the first data. In this way, the vehicle can perform living body detection when data transmitted by the display device to the first device is limited. In addition, the radar apparatus is integrated into the display device, so that wiring can be reduced when a monitoring range of the radar apparatus covers an interior of a cabin, thereby avoiding a change in the monitoring range caused by loosening of a fixed point of the radar apparatus.

With reference to the first aspect, in some embodiments, the display device in the vehicle may obtain the first data based on the M intermediate-frequency signals of the N1 frames of intermediate-frequency signals. The method may specifically include: The display device in the vehicle selects the M intermediate-frequency signals from the N1 frames of intermediate-frequency signals. The display device in the vehicle performs a Fourier transform on the M intermediate-frequency signals to obtain the first data. The first data may be range-bins obtained by performing range FFT computation on the M intermediate-frequency signals.

It may be understood that the display device in the vehicle may first obtain the M intermediate-frequency signals through selection from the N1 frames of intermediate-frequency signals, and then perform a Fourier transform on the M intermediate-frequency signals. In this way, a computational amount of the display device can be reduced, and living body detection can be performed when data transmitted by the display device to the first device is limited.

With reference to the first aspect, in some embodiments, that the display device in the vehicle obtains the first data based on the M intermediate-frequency signals of the N1 frames of intermediate-frequency signals may specifically include: The display device in the vehicle obtains second data based on the M intermediate-frequency signals. The second data may include an amplitude and/or a phase, in frequency domain, of an intermediate-frequency signal that is of the M intermediate-frequency signals and that is obtained based on an echo signal reflected within a first monitoring range. The display device in the vehicle obtains the first data through selection from the second data. The first data may include an amplitude and/or a phase, in frequency domain, of an intermediate-frequency signal that is of the M intermediate-frequency signals and that is obtained based on an echo signal reflected within a second monitoring range. The second monitoring range is smaller than the first monitoring range.

The first monitoring range may be a maximum range that can be monitored by the radar apparatus. A size of the first monitoring range may be obtained through calculation by using a range resolution of the radar apparatus and a quantity of sampling points of intermediate-frequency signals. The farthest distance of the first monitoring range may be the farthest distance that can be detected by the radar apparatus. The farthest distance that can be detected by the radar apparatus may be a signal transmission distance at which a radar signal transmitted by the radar apparatus cannot return to the radar apparatus after being reflected by an object, or may be the farthest straight-line distance at which the radar apparatus can reach the object. The second monitoring range may be a monitoring range of the cabin. The second monitoring range may be related to a length of the cabin of the vehicle. The second data may be range-bins corresponding to the monitoring range of the cabin.

It may be understood that the display device in the vehicle may select M intermediate-frequency signals from the N1*N2 intermediate-frequency signals, and then compute range-bin data of the M intermediate-frequency signals, to reduce a computational amount. In addition, the display device may further perform selection on a range-bin corresponding to each intermediate-frequency signal in a distance dimension. The display device may retain the range-bin data of the monitoring range of the cabin, and delete range-bin data that is far beyond the monitoring range of the cabin. In this way, living body detection can be performed when an amount of data transmitted by the display device to the first device is limited and computing power of the microprocessor in the display device is insufficient.

With reference to the first aspect, in some embodiments, that the first device in the vehicle determines, based on the first data, that a living body exists in the vehicle specifically includes: The first device in the vehicle obtains third data through selection from the first data. The third data includes an amplitude and/or a phase, in frequency domain, of an intermediate-frequency signal that is obtained based on an echo signal reflected at a first position. The first position is a position at a first distance from the radar apparatus. The first device in the vehicle groups the third data to obtain Q groups of data, where Q is a positive integer. The first device in the vehicle calculates feature values of the Q groups of data. The first device in a vehicle determines that a proportion of feature values that are greater than corresponding thresholds in the feature values of the Q groups of data exceeds a first proportion. The first device in the vehicle determines that a living body exists at the first position.

The first data may include range-bin data at different distances within the second monitoring range. The third data may include range-bin data at the first distance within the second monitoring range. The first position may be at the first distance from the radar apparatus within the second monitoring range. The first distance may be a straight-line distance from the radar apparatus, or may be a distance reflected by a plurality of objects. The first device may group the third data by dividing the third data into Q detection time windows. Different feature values may have different thresholds. The first device may calculate a proportion of a quantity of feature values exceeding corresponding thresholds in a total quantity of feature values in all time windows. When the proportion exceeds the first proportion, the first device may determine that a living body exists at the first position.

It may be understood that the first device may group all range-bins at the first distance, and separately calculate feature values of each group of range-bins. The first device may perform the foregoing living body determining method for all distances within the second monitoring range, to determine whether living bodies exist at different distances from the radar apparatus.

With reference to the first aspect, in some embodiments, that the first device in the vehicle calculates the feature values of the Q groups of data specifically includes: The first device in the vehicle calculates amplitude differences of each of Q groups of first data to obtain the amplitude differences. The first device may calculate an average and/or a variance of the amplitude differences. Additionally/alternatively, the first device in the vehicle calculates cumulative phase differences of each of the Q groups of first data to obtain the cumulative phase differences. The first device may calculate an average and/or a variance of the cumulative phase differences.

It may be understood that, when a living body in the vehicle changes its position, an amplitude or a phase of a range-bin at a corresponding position changes. The first device may calculate amplitude differences of the range-bins, to obtain an amplitude change status of the range-bins, and/or the first device may calculate cumulative phase differences of the range-bins, to obtain a phase change status of the range-bins. The first device may take an average and/or a variance of the amplitude differences, and/or take an average and/or a variance of the cumulative phase differences. Because the average and variance are not affected by a particular value, accuracy of living body determining can be prevented from being affected by vehicle vibration.

With reference to the first aspect, in some embodiments, that the first device in the vehicle calculates the feature values of the Q groups of data specifically includes: The first device in the vehicle calculates amplitude differences of each of Q groups of first data to obtain the amplitude differences. The first device obtains frequency-domain features of the amplitude differences. Additionally/alternatively, the first device in the vehicle calculates cumulative phase differences of each of the Q groups of first data to obtain the cumulative phase differences. The first device obtains frequency-domain features of the cumulative phase differences.

It may be understood that the first device may calculate change frequencies of the amplitude differences and the cumulative phase differences. The first device may select a feature corresponding to a frequency associated with a motion of a living body, and compare the feature with the threshold. In this way, interference such as vehicle body shaking can be eliminated, and accuracy of living body determining can be improved.

With reference to the first aspect, in some embodiments, before the vehicle transmits the radar signal by using the radar apparatus, and receives the echo signal, the method includes: The first device in the vehicle determines that one or more of a door, a window, an engine, a fuel filler port, and a charging port of the vehicle are closed. The first device in the vehicle sends a first signal to the display device. The first signal indicates the radar apparatus to transmit the radar signal.

It may be understood that the first device may perform living body detection after determining that one or more of the door, the window, the engine, the fuel filler port, and the charging port of the vehicle are closed. In this way, interference to accuracy of living body detection caused by movement of a pedestrian outside the vehicle can be effectively avoided. In addition, living body detection may also be avoided when the vehicle owner only temporarily leaves the vehicle.

With reference to the first aspect, in some embodiments, that the first device in the vehicle sends the first signal to the display device specifically includes: After determining that one or more of the door, the window, the engine, the fuel filler port, and the charging port of the vehicle are closed, the first device in the vehicle sends the first signal to the display device after waiting a first time period. Alternatively, after the first device in the vehicle sends the first signal to the display device, the method further includes: After waiting a second time period, the display device in the vehicle indicates the radar apparatus to transmit the radar signal and receive the echo signal. The first time period may be 5 seconds, and the second time period may also be 5 seconds.

It may be understood that, after determining that one or more of the door, the window, the engine, the fuel filler port, and the charging port of the vehicle are closed, the first device in the vehicle may wait the first time period and then indicates the radar apparatus in the display device to transmit the radar signal and receive the echo signal. Alternatively, after determining that one or more of the door, the window, the engine, the fuel filler port, and the charging port of the vehicle are closed, the first device in the vehicle may indicate the display device to start living body detection. The display device may wait the second time period and then indicate the radar apparatus in the display device to transmit the radar signal and receive the echo signal. This helps avoid impact on accuracy of living body detection caused by a pendant in the vehicle still swinging when the vehicle has just come to a stop.

With reference to the first aspect, in some embodiments, after the first device in the vehicle determines, based on the first data, that a living body exists in the vehicle, the method further includes: The first device in the vehicle sends first information to an electronic device. The first information indicates that a living body exists in the vehicle.

The electronic device may be a mobile phone, a computer, or a portable wearable device such as a watch or a band. A communication module in the first device may send the first information to the electronic device. The electronic device may notify the vehicle owner that a living body exists in the vehicle.

It may be understood that when determining that a living body exists in the vehicle, the first device may notify the electronic device of the vehicle owner. The electronic device may notify the vehicle owner that a living body exists in the vehicle. In this way, the vehicle owner can return to the vehicle in a timely manner to ensure life safety of the living body in the vehicle.

With reference to the first aspect, in some embodiments, the first device may be an in-vehicle infotainment system.

It may be understood that the in-vehicle infotainment system has strong computing power. The in-vehicle infotainment system may receive range-bin data sent by the display device, to determine whether a living body exists in the vehicle. In this way, the vehicle can perform living body detection in the cabin when computing power of the display device is low.

According to a second aspect, this application provides a living body detection method. The method may be applied to a vehicle, and the vehicle may include a display device and a first device. The display device may include a radar apparatus. The method may include: The vehicle transmits a radar signal by using the radar apparatus, and receives an echo signal. The display device in the vehicle obtains N1 frames of intermediate-frequency signals based on the radar signal and the echo signal. One of the N1 frames of intermediate-frequency signals may include N2 intermediate-frequency signals. One of the N2 intermediate-frequency signals may be obtained based on one radar signal transmitted by the radar apparatus and an echo signal of the radar signal. Both N1 and N2 are positive integers. The display device in the vehicle obtains second data based on the N1 frames of intermediate-frequency signals. The second data may be a range-bin obtained based on an echo signal reflected within a first monitoring range in N1*N2 intermediate-frequency signals. The range-bin includes an amplitude and/or a phase, in frequency domain, of an intermediate-frequency signal corresponding to the first monitoring range. The display device in the vehicle obtains the first data through selection from the second data. The first data may be a range-bin, in frequency domain, of an intermediate-frequency signal that is of the N1*N2 intermediate-frequency signals and that is obtained based on an echo signal reflected within a second monitoring range. The range-bin includes an amplitude and/or a phase, in frequency domain, of an intermediate-frequency signal corresponding to the second monitoring range. The second monitoring range is smaller than the first monitoring range. The display device in the vehicle may send the first data to the first device. The first device in the vehicle may determine, based on the first data, that a living body exists in the vehicle.

The radar apparatus may divide N2 radar signals into one frame. The radar apparatus may send N1 frames of radar signals, and receive echo signals of the N1 frames of radar signals. The radar apparatus may obtain an intermediate-frequency signal based on an echo signal corresponding to each radar signal. In this way, the radar apparatus may obtain N1*N2 intermediate-frequency signals in total. A microprocessor in the display device may perform range Fourier transform computation on the N1*N2 intermediate-frequency signals to obtain the first data. The first data may be range-bins obtained by performing range FFT computation on the N1*N2 intermediate-frequency signals. The first monitoring range may be a maximum range that can be monitored by the radar apparatus. A size of the first monitoring range may be obtained through calculation by using a range resolution of the radar apparatus and a quantity of sampling points of intermediate-frequency signals. The farthest distance of the first monitoring range may be the farthest distance that can be detected by the radar apparatus. The farthest distance that can be detected by the radar apparatus may be a signal transmission distance at which a radar signal transmitted by the radar apparatus cannot return to the radar apparatus after being reflected by an object, or may be the farthest straight-line distance at which the radar apparatus can reach the object. The second monitoring range may be a monitoring range of the cabin. The second monitoring range may be related to a length of the cabin of the vehicle. The second data may be range-bins corresponding to the monitoring range of the cabin.

It may be understood that the display device in the vehicle may perform a range Fourier transform on the N1*N2 intermediate-frequency signals to obtain range-bin data. The display device may perform selection on a range-bin corresponding to each intermediate-frequency signal in a distance dimension. The display device may retain the range-bin data of the monitoring range of the cabin, and delete range-bin data that is far beyond the monitoring range of the cabin. In this way, living body detection can be performed when an amount of data transmitted by the display device to the first device is limited and computing power of the microprocessor in the display device is insufficient. In addition, the radar apparatus is integrated into the display device, so that wiring can be reduced when a monitoring range of the radar apparatus covers an interior of a cabin, thereby avoiding a change in the monitoring range caused by loosening of a fixed point of the radar apparatus.

According to a third aspect, this application provides a vehicle. The vehicle includes a display device, a memory, and a processor. The display device may be configured to display an interface. The display device may include a radar apparatus. The radar apparatus may be configured to transmit a radar signal and receive an echo signal. The memory may store computer executable instructions. When the processor executes the computer executable instructions, the vehicle may be enabled to implement any possible implementation of the first aspect or the second aspect.

According to a fourth aspect, this application provides a computer storage medium, including instructions. When the instructions are run on a vehicle, the vehicle is enabled to perform any possible implementation of the first aspect or the second aspect.

According to a fifth aspect, an embodiment of this application provides a chip. The chip is used in a vehicle, the chip includes one or more processors, and the processor is configured to invoke computer instructions, so that the vehicle performs any possible implementation of the first aspect or the second aspect.

According to a sixth aspect, an embodiment of this application provides a computer program product including instructions. When the computer program product is run on a device, the vehicle is enabled to perform any possible implementation of the first aspect or the second aspect.

It may be understood that the vehicle provided in the third aspect, the computer storage medium provided in the fourth aspect, the chip provided in the fifth aspect, and the computer program product provided in the sixth aspect are all configured to perform the method provided in embodiments of this application. Therefore, for beneficial effects that can be achieved, refer to beneficial effects in the corresponding methods. Details are not described herein again.

## BRIEF DESCRIPTION OF DRAWINGS

FIG. 1 is a diagram of an architecture of a living body detection system according to an embodiment of this application;

FIG. 2 is a diagram of a structure of a vehicle according to an embodiment of this application;

FIG. 3 is a diagram of a structure of an electronic device according to an embodiment of this application;

FIG. 4A is a front view of a central control display according to an embodiment of this application;

FIG. 4B is a diagram of an internal structure of a radar apparatus integrated into a central control display according to an embodiment of this application;

FIG. 5A to FIG. 5D are diagrams of some scenarios in which a radar apparatus in a vehicle transmits a beam according to an embodiment of this application;

FIG. 6 is a flowchart of a living body detection method according to an embodiment of this application;

FIG. 7A and FIG. 7B are diagrams of some radar data cubes according to an embodiment of this application;

FIG. 8A is a diagram of a distance spectrogram of intermediate-frequency signals according to an embodiment of this application;

FIG. 8B is a diagram of a distance spectrogram for range-bin data processing according to an embodiment of this application;

FIG. 8C is a plane view of a radar data block for range-bin data processing according to an embodiment of this application;

FIG. 9A is a diagram of multi-frame range-bin data processing according to an embodiment of this application;

FIG. 9B is a plane view of a radar data block for multi-frame range-bin data processing according to an embodiment of this application;

FIG. 9C is a diagram of range-bin data sent by a central control display to an in-vehicle infotainment system according to an embodiment of this application;

FIG. 10A is an example diagram of amplitude value data blocks of amplitude differences according to an embodiment of this application; and

FIG. 10B is a schematic flowchart of determining, by using a time-domain feature, whether a living body exists at a distance from a radar apparatus corresponding to a range-bin whose sequence number is 2 according to an embodiment of this application.

## DESCRIPTION OF EMBODIMENTS

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should be further understood that the term "and/or" used in this application means and includes any or all possible combinations of one or more listed items.

In the following, the terms "first" and "second" are merely intended for the purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

This application provides a radar-based living body detection method. For ease of understanding, related terms and concepts in the embodiments of this application are first described below.

(1) Frequency modulated continuous wave

The frequency modulated continuous wave (frequency modulated continuous wave, FMCW) is a frequency modulated continuous signal. A frequency of the frequency modulated continuous wave varies with time. A frequency modulated continuous wave signal whose frequency varies linearly with time is referred to as a linear frequency modulated continuous wave signal.

(2) Intermediate-frequency signal

The intermediate-frequency signal is a signal obtained through frequency conversion from a high-frequency signal, and is a signal form at an intermediate frequency. A difference frequency signal obtained by mixing a transmitted signal and an echo signal of a radar apparatus is an intermediate-frequency signal. A frequency of the intermediate-frequency signal is a frequency difference between the transmitted signal and a receive signal, and a phase is a phase difference between the transmitted signal and the receive signal.

(3) Fast Fourier transform

The Fast Fourier Transform (fast Fourier transform, FFT) is a fast algorithm for calculating a discrete Fourier transform. The fast Fourier transform may be used to convert a waveform signal from time domain to frequency domain.

(4) Range FFT

The range FFT (Range FFT) is an operation of performing N-point FFT computation on an intermediate-frequency signal. N is a quantity of sampling points of the intermediate-frequency signal. After the range FFT is performed on the intermediate-frequency signal, a range-bin (range-bin) may be obtained. A range-bin may correspond to a frequency of the intermediate-frequency signal. Therefore, after N-point FFT computation is performed on the intermediate-frequency signal, N range-bins may be obtained. A range-bin may reflect information about a specific position of a radar apparatus. The range-bin may have an amplitude and a phase. An amplitude and a phase of a range-bin may be respectively an amplitude and a phase of an intermediate-frequency signal at a frequency. Displacement occurs when a living body moves. The foregoing displacement causes the amplitude and the phase of the range-bin at a corresponding position to change. When an amplitude or phase change amount of a range-bin within a time period exceeds a preset amplitude threshold or phase threshold, it may indicate that a living body exists at a position corresponding to the range-bin.

(5) Range resolution

When two targets are located in a same direction of a radar apparatus but are at different distances from the radar apparatus, a minimum distance at which the radar apparatus can distinguish between the two targets is referred to as a range resolution of the radar apparatus.

Embodiments of this application provide a method for detecting a living body in a vehicle by using a radar. The radar apparatus may be integrated into a display in the vehicle. When the vehicle is turned off and a window is closed, the vehicle may start to perform living body detection. Specifically, a display microprocessor (microcontroller unit, MCU) may be further integrated into the display in the vehicle. The display MCU can control the radar apparatus to transmit a radar signal and receive an echo signal reflected by a target. The display MCU may perform frequency difference processing on the radar signal transmitted by the radar apparatus and the received echo signal, to obtain an intermediate-frequency signal. Then, the display MCU may perform selection on the intermediate-frequency signal in a time dimension, and then perform range FFT computation on the selected intermediate-frequency signal to obtain range-bins. The display MCU may extract range-bins within an effective range and send the range-bins to an in-vehicle infotainment system of the vehicle. Alternatively, after performing range FFT computation on the intermediate-frequency signal, the display MCU may perform selection on the obtained range-bins in a time dimension and a distance dimension, and send the range-bins obtained through selection to the in-vehicle infotainment system. The in-vehicle infotainment system may determine whether a living body exists in the vehicle based on the range-bins. When determining that a living body exists in the vehicle, the in-vehicle infotainment system may send a leaving-behind notification to a user terminal.

It may be understood that the living body is usually in a state of continuous motion. For example, breathing of the living body causes slight displacement of its thoracic cavity. For another example, movement of the living body results in changes in its position. An amplitude and a phase of a range-bin corresponding to a distance between the living body and the radar apparatus vary with displacement of the living body. In this way, the in-vehicle infotainment system may determine, based on an amplitude and phase change status of the range-bin in a continuous time, whether a living body exists in the vehicle.

In this application, the radar apparatus is integrated into the display, so that wiring in the vehicle can be reduced. In addition, because a position of the display is fixed, integrating the radar apparatus into the display can avoid changes in a detection area due to loosening of a fastening point of the radar apparatus, leading to false detection or missing detection. In addition, when processing the intermediate-frequency signal, the display MCU performs data selection in a time dimension and a distance dimension. The foregoing data selection can reduce an amount of data transmitted by the display MCU to the in-vehicle infotainment system. In this way, when a data transmission amount between the display MCU and the in-vehicle infotainment system is limited, the in-vehicle infotainment system can also quickly perform living body detection based on data sent by the display MCU, thereby improving efficiency of living body detection. In addition, the display sends the range-bins to the in-vehicle infotainment system, and the in-vehicle infotainment system performs living body detection by using a distributed processing method, which can reduce a requirement for computing power of the display MCU. Even if the display MCU has low computing power, the vehicle 100 may also perform living body detection.

In some embodiments, the display in the vehicle may include a central control display, a streaming rearview mirror, a rear seat display, and the like. In the living body detection method provided in this application, the radar apparatus may be integrated into any one or more displays in the vehicle. For ease of description, in subsequent embodiments of this application, a central control display is used as an example to describe the living body detection method. This is not limited to the central control display, and may also be another display. All invention ideas provided based on this application fall within the protection scope of this application. In some embodiments, the radar apparatus may be further integrated into a plurality of displays in the vehicle. Because positions of the displays are different, positions at which the radar apparatus receives and sends a signal may also be different. In this case, there may be different monitoring ranges. The in-vehicle infotainment system may determine whether a living body exists at a specific position in the vehicle by using signals of a plurality of radar apparatuses integrated into different displays together.

The radar apparatus in this application may include one or more of the following radar apparatuses: a lidar, a millimeter-wave radar, a microwave radar, and the like. A radar signal transmitted by the millimeter-wave radar is not affected by light intensity, and accuracy of the millimeter-wave radar does not decrease accordingly. In addition, the millimeter-wave radar has a higher resolution, and the transmitted radar signal can be reflected in the vehicle. When the living body is blocked by a seat, the millimeter-wave radar can still be used to detect the living body left in the vehicle. In addition, the millimeter-wave radar can sense micro-movements such as breathing and heartbeat. Even if a child or pet in the vehicle is in deep sleep, the left child or pet can still be accurately detected. A type of the radar apparatus integrated into the display of the vehicle 100 is not limited in this application.

An application scenario of living body detection in embodiments of this application is not limited. In addition to a living body in the vehicle, a living body in another application scenario may also be detected, for example, a warehouse, a toilet, and a bathroom. The radar apparatus may be integrated into a home device, a central control device in a toilet, or the like. In embodiments of this application, an application scenario in which the radar apparatus is disposed on a central control display in the vehicle and detects a living body in the vehicle is used as an example for specific description.

The following describes a living body detection system provided in an embodiment of this application.

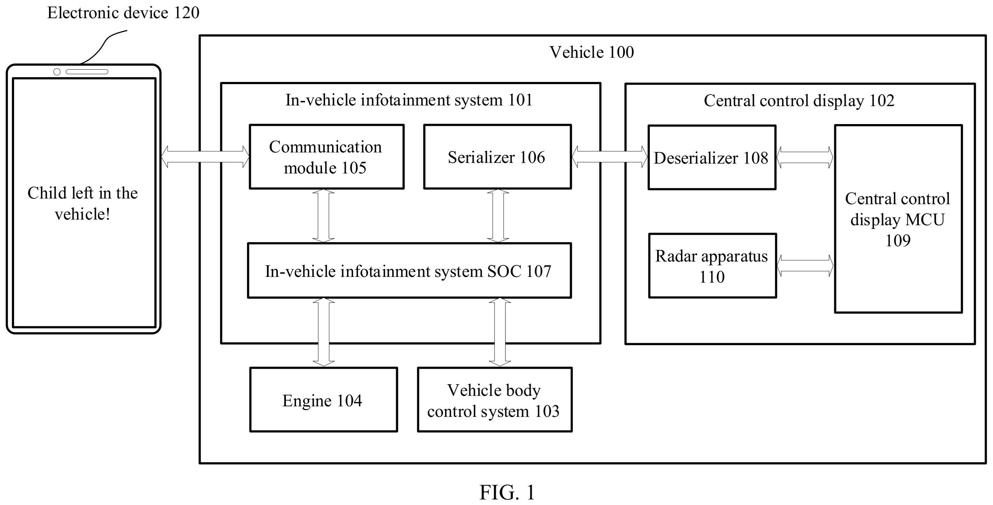

FIG. 1 is a diagram of an architecture of a living body detection system.

As shown in FIG. 1, the living body detection system may include a vehicle 100 and an electronic device 120. The vehicle 100 includes an in-vehicle infotainment system 101, a central control display 102, a vehicle body control system 103, an engine 104, and the like.

The in-vehicle infotainment system 101 may be used by the vehicle 100 to access the Internet to communicate with a device such as the electronic device 120. The in-vehicle infotainment system 101 may provide a remote communication interface for the vehicle 100, providing services including navigation, entertainment, driving data acquisition, traveling trajectory recording, vehicle fault monitoring, remote vehicle query and control (such as locking/unlocking, air conditioning control, window control, engine torque limitation, engine start/stop, seat adjustment, a battery level query, a fuel level query, and a door status query), driving behavior analysis, wireless hotspot sharing, roadside assistance, exception notification, and the like.

The in-vehicle infotainment system 101 may be configured to communicate with a vehicle telematics service provider (telematics service provider, TSP) and an electronic device on a user side (for example, a driver), to implement vehicle status display and control on the electronic device 120. After the user sends a control command by using a vehicle management application on the electronic device, the TSP sends a request instruction to the in-vehicle infotainment system 101. After obtaining the control command, the in-vehicle infotainment system 101 sends a control packet through a CAN bus to control the vehicle 100, and finally feeds back an operation result to the vehicle management application on the electronic device on the user side. In other words, data such as a vehicle status report, a driving report, fuel consumption statistics, a violation query, a position trajectory, and driving behavior read by the in-vehicle infotainment system 101 through the CAN bus may be transmitted to a TSP background system through a network, and the TSP background system forwards the data to the electronic device on the user side for the user to view.

The in-vehicle infotainment system 101 may specifically include a communication module 105, a serializer 106, and an in-vehicle infotainment system system-on-chip (system on Chip, SOC) 107.

The communication module 105 may be configured to provide a wireless communication function, and support the vehicle 100 in communicating with another device by using a wireless communication technology, for example, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or ultra-wideband (ultra-wideband, UWB). The communication module 105 may be further configured to provide a mobile communication function, and support the vehicle 100 in communicating with another device by using a communication technology, for example, a global system for mobile communications (global system for mobile communications, GSM), a universal mobile telecommunications system (universal Mobile telecommunications system, UMTS), wideband code division multiple access (wideband code division multiple access, WCDMA), time-division code division multiple access (time-division code division multiple access, TD-SCDMA), long term evolution (long term evolution, LTE), 5G, and future 6G.

The communication module 105 may establish a connection to and communicate with another device like a server or a user-side electronic device by using a cellular vehicle to everything (vehicle to everything, V2X) communication technology (cellular V2X, C-V2X). For example, the C-V2X may include long term evolution (long term evolution, LTE)-based V2X (LTE-V2X), 5G-V2X, and the like.

The serializer 106 is an interface circuit in the in-vehicle infotainment system 101. The serializer 106 may be configured to convert parallel data into serial data. Video data processed by the in-vehicle infotainment system 101 may be a plurality of pieces of parallel high-speed data. Because there is a large amount of parallel data, the in-vehicle infotainment system 101 can hardly directly transmit the parallel data to the central control display 102. The serializer 106 may convert a plurality of pieces of parallel data processed by the in-vehicle infotainment system SOC 107 into serial data, and then send the serial data to a deserializer 108 in the central control display 102.

The in-vehicle infotainment system SOC 107 may include one or more processing units. The in-vehicle infotainment system SOC 107 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the in-vehicle infotainment system 101. The controller may generate an operation control signal based on instruction operation code and a time sequence signal, to complete control of instruction fetching and instruction execution. In some embodiments, the controller in the in-vehicle infotainment system SOC 107 may be one or more MCUs.

A memory may be further disposed in the in-vehicle infotainment system SOC 107, and is configured to store instructions and data. In some embodiments, the memory in the processor is a cache. The memory may store instructions or data just used or cyclically used by the processor. If the processor needs to use the instructions or the data again, the processor may directly invoke the instructions or the data from the memory. This avoids repeated access and reduces waiting time of the processor, thereby improving system efficiency.

The in-vehicle infotainment system 101 may also be referred to as a T-box, a remote information processor, a vehicle gateway, or the like. This is not limited in embodiments of this application.

The vehicle body control system 103 may control vehicle body components in the vehicle 100. For example, the vehicle body control system 103 may control one or more of vehicle body components such as a window, a door, a fuel filler port, and a charging port. The vehicle body control system 103 may include one or more control units for the vehicle body components: a window control unit, a door control unit, a fuel tank control unit, and a charging control unit. The window control unit may control opening and closing of a window of the vehicle 100. The door control unit may control opening and closing of a door in the vehicle 100. The fuel tank control unit may be configured to control opening and closing of a fuel tank in the vehicle 100. In some embodiments, the vehicle 100 may be an electric vehicle. In this way, the fuel tank control unit may be replaced with the charging control unit. The charging control unit may be configured to control opening and closing of a charging port of the vehicle 100. The charging port is configured to charge the vehicle 100. In some other embodiments, the vehicle 100 may alternatively be a hybrid vehicle powered by both fuel and electricity, and the vehicle 100 may include both the fuel tank control unit and the charging control unit. A power source of the vehicle 100 is not limited in embodiments of this application.

The engine 104 is an apparatus that supplies power to the vehicle 100. The engine 104 may include an engine MCU, configured to manage the engine and coordinate various functions of the engine, for example, may be configured to start the engine or stop the engine. In this embodiment of this application, when the engine 104 is stopped, the engine MCU may send a turn-off signal to the in-vehicle infotainment system 101.

The central control display 102 may be configured to provide a visualized interface for the driver. The central control display 102 may include the deserializer 108 and a central control display MCU 109. In this embodiment of this application, the central control display 102 may further include a radar apparatus 110.

The deserializer 108 is an interface circuit of the central control display 102. The deserializer 108 may convert serial data sent by the serializer 106 in the in-vehicle infotainment system 101 into parallel data, to facilitate processing by the central control display 102. In addition to receiving the data sent by the serializer 106, the deserializer 108 may further send the data to the serializer 106 by using a reverse data channel. The serializer 106 and the deserializer 108 may be connected by using a bidirectional two-wire synchronous serial bus (inter-integrated circuit, I2C).

The central control display MCU 109 is a brain of the central control display 102. The central control display MCU 109 may generate an operation control signal based on instruction operation code and a time sequence signal, to complete control of instruction fetching and instruction execution. The central control display 102 may further include a display panel. The central control display MCU 109 may control, through the foregoing instruction, the display panel in the central control display 102 to display different images. In this embodiment of this application, the central control display MCU 109 may further indicate the radar apparatus 110 to transmit a radar signal and receive an echo signal reflected by a target.

The radar apparatus 110 may include a transmit antenna, a receive antenna, a frequency mixer, and the like. The transmit antenna may be configured to transmit a radar signal. The receive antenna may be configured to receive an echo signal of the radar signal. Quantities of transmit antennas and receive antennas may be greater than 1. The transmit antenna may also be referred to as a TX antenna, and the receive antenna may also be referred to as an RX antenna. The frequency mixer may mix each radar signal transmitted by the TX antenna and an echo signal that is of the same radar signal and that is received by the RX antenna after being reflected by an object at a different distance, to generate an intermediate-frequency signal. The intermediate-frequency signal generated after frequency mixing may be considered as a linear combination of individual intermediate-frequency signals generated by a plurality of objects. A frequency of the intermediate-frequency signal after frequency mixing is a superposition of frequencies of the individual intermediate-frequency signals generated by the plurality of objects. A bandwidth of the radar signal transmitted by the TX antenna of the radar apparatus 110 may be 100 MHz to 2 GHz. The bandwidth of the radar apparatus 110 is not limited in embodiments of this application.

The electronic device 120 may include an antenna, a wireless communication module, a processor, and a display. The antenna is configured to transmit and receive an electromagnetic wave signal. Each antenna in the electronic device 120 may be configured to cover one or more communication frequency bands. The wireless communication module of the electronic device 120 may receive an electromagnetic wave through an antenna, and perform frequency modulation and filtering processing on the electromagnetic wave signal. In some embodiments, the electronic device 120 may establish a connection to the communication module 105 in the in-vehicle infotainment system 101, and receive living body leaving-behind information sent by the in-vehicle infotainment system 101. The electronic device 120 may display prompt information on the display based on the received living body leaving-behind information, to prompt the user that a living body exists in the vehicle.

For example, the prompt information displayed in the electronic device 120 may be text information "Child left in the vehicle!". A method for prompting the user by the electronic device 100 may alternatively be in a form of voice broadcast, vibration, or the like. This embodiment of this application does not limit a manner in which the electronic device 120 prompts the user after receiving the living body leaving-behind information sent by the in-vehicle infotainment system 101. The electronic device 120 may be a mobile phone, a computer, or a portable wearable device such as a watch or a band. A type of the electronic device 120 is not limited in embodiments of this application.

In some embodiments, after the vehicle 100 is turned off and locked, the in-vehicle infotainment system SOC 107 may receive a vehicle locking signal sent by the door control unit and a turn-off signal sent by the engine 104. Then, the in-vehicle infotainment system SOC 107 may send a living body detection instruction to the serializer 106. The serializer 106 in the in-vehicle infotainment system 101 may send the living body detection instruction to the deserializer 108 of the central control display 102, to instruct the central control display 102 to perform living body detection. After reading the living body detection instruction received by the deserializer 108, the central control display MCU 109 may start the radar apparatus 110 to start to transmit and receive signals. The radar apparatus 110 may transmit a radar signal through the transmit antenna, and receive, through the receive antenna, an echo signal that is of the radar signal and that is reflected by an object in the vehicle. The radar signal transmitted by the radar apparatus 110 may be a linear frequency modulated continuous wave signal. The frequency mixer in the radar apparatus 110 may perform frequency mixing on the radar signal and the echo signal, to generate an intermediate-frequency signal. The central control display MCU 109 may perform a range FFT on the intermediate-frequency signal to obtain a range-bin of the intermediate-frequency signal. Then, the central control display MCU 109 may extract range-bin data within an effective monitoring range in a cabin of the vehicle 100, and send the range-bin data to the serializer 106 of the in-vehicle infotainment system 101 by using the deserializer 108. The effective range may include range-bin data corresponding to a target whose distance from the radar apparatus 110 is within a preset length. The preset length may be related to a length of the cabin of the vehicle 100. A longer length of the cabin of the vehicle 100 indicates a longer preset length. For example, when the length of the cabin is 2 meters, the preset length may be 2.5 meters. The in-vehicle infotainment system SOC 107 may read the range-bin data received by the serializer 106, and determine whether a living body exists in the vehicle 100. When the in-vehicle infotainment system SOC 107 determines that a living body exists in the vehicle 100, living body leaving-behind information may be sent to the electronic device 120 by using the communication module 105.

In some embodiments, in addition to receiving the vehicle locking signal sent by the door control unit and the turn-off signal sent by the engine, the in-vehicle infotainment system SOC 107 may further receive a window closing signal sent by the window control unit, a fuel filler port closing signal sent by the fuel filler port control unit, and a charging port closing signal sent by the charging control unit. The in-vehicle infotainment system SOC 107 may send the living body detection instruction to the central control display 102 after receiving the vehicle locking signal, the turn-off signal, the window closing signal, the fuel filler port closing signal, and the charging port closing signal. The window closing signal may be sent by the window control unit in the vehicle body control system 103 to the in-vehicle infotainment system SOC 107 after a window of the vehicle 100 is closed. The fuel filler port closing signal may be sent by the fuel tank control unit in the vehicle body control system 103 to the in-vehicle infotainment system SOC 107 after a fuel filler port of the vehicle 100 is closed. The charging port closing signal may be sent by the charging control unit in the vehicle body control system 103 to the in-vehicle infotainment system SOC 107 after a charging port of the vehicle 100 is closed.

In some embodiments, after receiving the living body detection instruction sent by the in-vehicle infotainment system 101, the central control display MCU 109 may start the radar apparatus 110 a plurality of times to transmit and receive signals. For example, the central control display MCU 109 may instruct the radar apparatus 110 to transmit and receive signals once every 5 minutes within 30 minutes. Each time a signal is transmitted and received, the transmit antenna and the receive antenna in the radar apparatus 110 may run for 30 seconds.

In some other embodiments, after the vehicle 100 is turned off, one or more ornaments in the vehicle 100 may continue swinging for a period of time before entering a static state. After receiving the living body detection instruction sent by the in-vehicle infotainment system 101, the central control display MCU 109 may wait a second time period and then instruct the radar apparatus 110 to perform living body detection. This can reduce impact of swinging of the ornament in the vehicle on accuracy of living body detection by the radar apparatus 110. In a possible implementation, in addition to receiving the vehicle locking signal sent by the door control unit and the turn-off signal sent by the engine, the in-vehicle infotainment system SOC 107 may further wait a first time period and then send a signal to indicate the central control display MCU 109 to start living body detection.

The following describes a diagram of structure of the vehicle 100 according to an embodiment of this application.

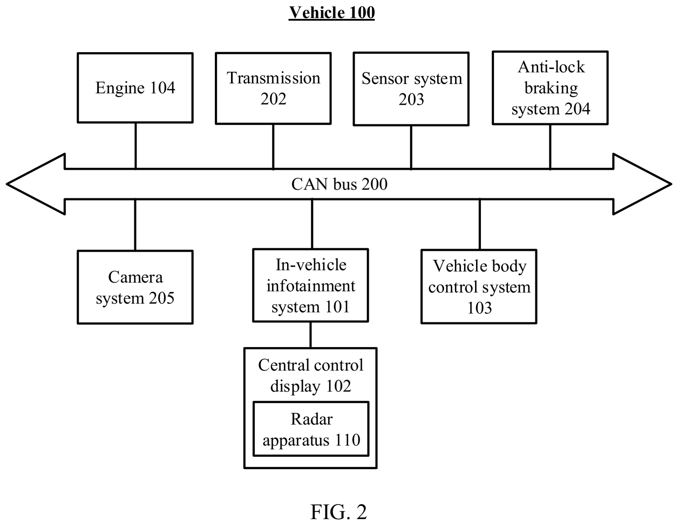

**FIG. 2 is a diagram of a structure of the vehicle 100 according to an embodiment of this application.**

As shown in FIG. 2, the vehicle 100 includes a controller local area network (controller area network, CAN) bus 200, an engine 104, a transmission 202, a sensor system 203, an anti-lock braking system (anti-lock braking system, ABS) 204, a camera system 205, an in-vehicle infotainment system 101, a central control display 102, and a vehicle body control system 103.

The CAN bus 200 is a serial communication network that supports distributed control or real-time control, and is configured to connect components of the vehicle 100. Any component on the CAN bus 200 may monitor all data transmitted on the CAN bus 200. A frame transmitted on the CAN bus 200 may include a data frame, a remote frame, an error frame, and an overload frame. Different types of data are transmitted in different frames. In this embodiment of this application, the CAN bus 200 may be configured to transmit data related to each component in a voice instruction-based control method. For specific implementation of the method, refer to detailed descriptions in the following method embodiments.

This is not limited to the CAN bus 200. In some other embodiments, the components of the vehicle 100 may alternatively be connected to and communicate with each other in another manner. For example, the components may alternatively communicate with each other through a vehicle-mounted Ethernet (ethernet) local interconnect network (local interconnect network, LIN) bus, a FlexRay, a common vehicle-mounted network system (media oriented system transport, MOST) bus, or the like. This is not limited in embodiments of this application. The following embodiments are described by using an example in which the components communicate with each other through the CAN bus 200.

The engine 104 is an apparatus that supplies power to the vehicle 100. The engine 104 is a machine that converts energy of a specific form into mechanical energy. The vehicle 100 may be configured to convert chemical energy from combustion of liquid or gas, or electric energy into mechanical energy, and output power to the outside. The engine 104 may include two main mechanisms, namely, a crankshaft and connecting rod mechanism and a valve mechanism, and five systems, namely, a cooling system, a lubrication system, an ignition system, a power supply system, and a start-up system. Main components of the engine 104 include a cylinder block, a cylinder head, a piston, a piston pin, a connecting rod, a crankshaft, a flywheel, and the like.

The transmission 202 is a mechanism that can be used to change a rotational speed and torque of the engine, and can fix or segmentally adjust a gear ratio between an output shaft and an input shaft. The transmission 202 may include a transmission mechanism, a control mechanism, a power output mechanism, and the like. A main function of the transmission mechanism is to change a value and direction of the torque and rotational speed. A main function of the control mechanism is to control the transmission mechanism and implement changes in the gear ratio of the transmission, that is, to implement gear shifting, thereby achieving speed and torque variation.

The sensor system 203 may include an acceleration sensor, a vehicle speed sensor, a vibration sensor, a gyroscope sensor, a signal transmitter, a signal receiver, and the like. The acceleration sensor and the vehicle speed sensor are configured to detect a speed of the vehicle 100. The vibration sensor may be disposed under a seat, or in a seat belt, a seat back, an operation panel, an airbag, or another position, and is configured to detect whether the vehicle 100 is collided and detect a position of the user. The gyroscope sensor may be configured to determine a motion posture of the vehicle 100. The signal transmitter and the signal receiver are configured to transmit and receive a signal, and the signal may be, for example, an ultrasonic wave, a millimeter wave, or laser light.

The anti-lock braking system 204 automatically controls a magnitude of a braking force during vehicle braking, to prevent a wheel from locking up and maintain a state of combined rolling and sliding, thereby ensuring that an adhesion force between the wheel and the ground remains at a maximum. During braking, when an electronic control apparatus determines, based on a wheel speed signal input by a wheel speed sensor, that the wheel is about to lock up, the anti-lock braking system enters an anti-lock braking pressure adjustment process.

The camera system 205 may include a plurality of cameras, and the camera is configured to capture a still image or a video. The cameras in the camera system 205 may be disposed in positions such as the front, the rear, a side, or the inside of the vehicle, to help implement functions such as assisted driving, travel recording, panoramic view, and in-vehicle monitoring.

The in-vehicle infotainment system 101 is mainly responsible for communicating with the Internet.

The in-vehicle infotainment system 101 may be connected to the central control display 102 through an I2C bus. In this embodiment of this application, the central control display 102 may include a radar apparatus. The radar apparatus may transmit an electromagnetic wave to irradiate a target and receive an echo of the target, to detect whether a living body exists in the vehicle 100.

The vehicle body control system 103 may control vehicle body components in the vehicle 100. For example, the vehicle body control system 103 may control a window, a door, a fuel filler port, and/or a charging port.

It may be understood that the structure shown in this embodiment of this application does not constitute a specific limitation on the vehicle system. The vehicle 100 may include more or fewer components than those shown in the figure, or some components may be combined, or some components may be split, or there may be a different component arrangement. The components shown in the figure may be implemented by hardware, software, or a combination of software and hardware.

For example, the vehicle 100 may further include a separate memory, a battery, a vehicle lamp, a wiper, a dashboard, a stereo, a vehicle-mounted terminal (transmission control unit, TCU), an auxiliary control unit (auxiliary control unit, ACU), an intelligent passive entry passive start (passive entry passive start, PEPS) system, an on-board unit (on-board unit, OBU), a charging interface, and the like.

In some embodiments, the vehicle 100 may further include a streaming rear view mirror. The streaming rearview mirror may be mounted at the top center of a center console to display media information or interior and exterior surroundings of a cabin of the vehicle 100. The streaming rearview mirror may include a streaming rearview mirror MCU and a deserializer. The deserializer in the streaming rearview mirror may communicate with an in-vehicle infotainment system SOC 107 in the in-vehicle infotainment system 101. For descriptions of the streaming rearview mirror MCU and the deserializer in the streaming rearview mirror, refer to descriptions of the central control display MCU 109 and the deserializer 108 in the central control display 102. Details are not described herein again. In a possible implementation, the streaming rearview mirror may include a radar apparatus, configured to detect a living body in the cabin of the vehicle 100.

In a possible implementation, the radar apparatus may be further mounted on the roof of the vehicle or inside a seat headrest. When the central control display 102 determines that a living body exists at a position in the vehicle 100, the radar apparatus on the roof of the vehicle or inside a corresponding seat may determine a detection result of the central control display 102. For specific functions of the components of the vehicle 100, refer to descriptions in subsequent method embodiments. Details are not described herein.

The following describes a diagram of a structure of an electronic device 120 according to an embodiment of this application.

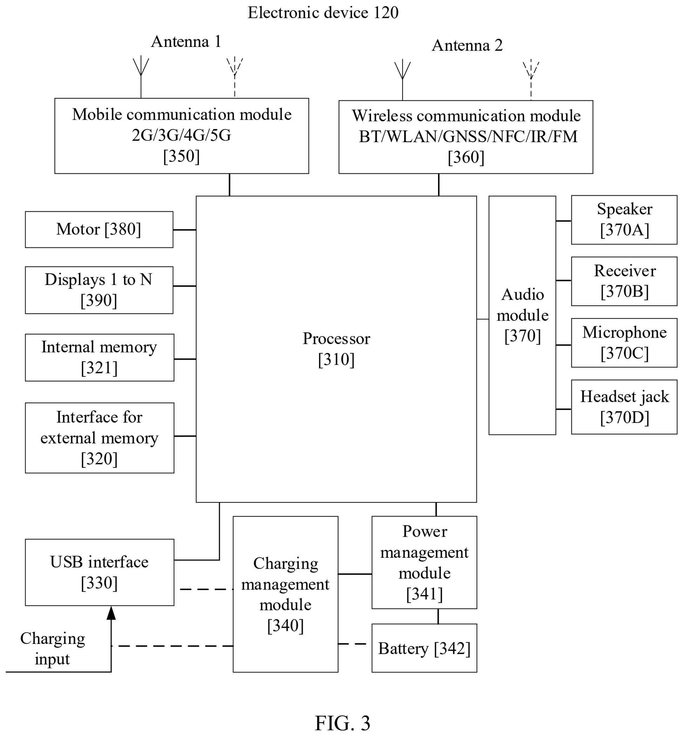

**FIG. 3 is a diagram of a structure of the electronic device 120 according to an embodiment of this application.**

The electronic device 120 is used as an example below to describe embodiments in detail. It should be understood that the electronic device 120 may have more or fewer components than those shown in the figure, may combine two or more components, or may have a different component configuration. Components shown in the figure may be implemented by hardware including one or more signal processing and/or application-specific integrated circuits, software, or a combination of hardware and software.

The electronic device 120 may include a processor 310, an interface for external memory 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a motor 380, a display 390, and the like.

It may be understood that the structure shown in this embodiment of the present invention does not constitute a specific limitation on the electronic device 120. In some other embodiments of this application, the electronic device 120 may include more or fewer components than those shown in the figure, or some components may be combined, or some components may be split, or there may be a different component arrangement. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 120. The controller may generate an operation control signal based on instruction operation code and a time sequence signal, to complete control of instruction fetching and instruction execution.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access and reduces waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 340 is configured to receive a charging input from a charger. The charger may be a wireless charger or a wired charger.

The power management module 341 is configured to connect to the battery 342, the charging management module 340, and the processor 310. The power management module 341 receives an input of the battery 342 and/or the charging management module 340, and supplies power to the processor 310, the internal memory 321, an external memory, the display 390, the wireless communication module 360, and the like.

A wireless communication function of the electronic device 120 may be implemented through the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the electronic device 120 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 350 may provide a solution applied to the electronic device 120 for wireless communication including 2G/3G/4G/5G or the like. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit the electromagnetic wave to the modem processor for demodulation. The mobile communication module 350 may further amplify a signal modulated by the modem processor, and convert the signal into an electromagnetic wave for radiation through the antenna 1. In some embodiments, at least some functional modules in the mobile communication module 350 may be disposed in the processor 310. In some embodiments, at least some functional modules in the mobile communication module 350 may be disposed in a same device as at least some modules in the processor 310.

The modem processor may include a modulator and a demodulator. The modulator is configured to modulate a to-be-sent low-frequency baseband signal into a medium- and high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 370A, the receiver 370B, or the like), or displays an image or a video through the display 390. In some embodiments, the modem processor may be an independent component. In some other embodiments, the modem processor may be independent of the processor 310, and is disposed in a same component as the mobile communication module 350 or another functional module.

The wireless communication module 360 may provide a wireless communication solution that is used in the electronic device 120 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 360 may be one or more components integrating at least one communication processor module. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2.

In some embodiments, in the electronic device 120, the antenna 1 and the mobile communication module 350 are coupled, and the antenna 2 and the wireless communication module 360 are coupled, so that the electronic device 120 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like.

The electronic device 120 may implement a display function through the GPU, the display 390, the application processor, and the like. The GPU is a microprocessor for image processing, and is connected to the display 390 and the application processor. The GPU is configured to perform mathematical and geometric computation for graphic rendering. The processor 310 may include one or more GPUs that execute program instructions to generate or change display information.

The display 390 is configured to display an image, a video, and the like. The display 390 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 120 may include one or N displays 390, where N is a positive integer greater than 1.

The interface for external memory 320 may be configured to connect to an external storage card, for example, a micro SD card, to extend a storage capability of the electronic device 120. The external storage card communicates with the processor 310 through the interface for external memory 320, to implement a data storage function. For example, files such as music and videos are stored in the external storage card.

The internal memory 321 may be configured to store computer-executable program code, and the executable program code includes instructions. The processor 310 executes various functional applications and data processing of the electronic device 120 by running the instructions stored in the internal memory 321. The internal memory 321 may include a program storage area and a data storage area. The program storage area may store an operating system and an application required by at least one function (for example, a facial recognition function, a fingerprint recognition function, and a mobile payment function). The data storage area may store data (such as facial information template data and a fingerprint information template) created during use of the electronic device 120. In addition, the internal memory 321 may include a high-speed random access memory, and may further include a non-volatile memory, for example, at least one magnetic disk storage device, a flash memory, or a universal flash storage (universal flash storage, UFS).

The audio module 370 is configured to convert digital audio information into an analog audio signal output, and is also configured to convert an analog audio input into a digital audio signal. The audio module 370 may be further configured to encode and decode an audio signal. In some embodiments, the audio module 370 may be disposed in the processor 310, or some functional modules of the audio module 370 are disposed in the processor 310.

The speaker 370A, also referred to as a "loudspeaker", is configured to convert an audio electrical signal into a sound signal. The electronic device 120 may be used to listen to music or answer a call in a hands-free mode through the speaker 370A. In some embodiments, when the electronic device 120 receives living body leaving-behind information sent by a vehicle 100, the speaker 370A in the electronic device 120 may provide a voice prompt for a user. For example, the speaker 370A may broadcast "Child left in the vehicle!" through a voice.

The receiver 370B, also referred to as an "earpiece", is configured to convert an audio electrical signal into a sound signal. When a call is answered or a voice message is received on the electronic device 120, the receiver 370B may be put close to a human ear to listen to a voice.

The microphone 370C, also referred to as a "mike" or a "mic", is configured to convert a sound signal into an electrical signal. When making a call or sending a voice message, the user may make a sound near the microphone 370C through the mouth of the user, to input a sound signal to the microphone 370C.

The headset jack 370D is configured to connect to a wired headset. The headset jack 370D may be a USB interface 330, or may be a 3.5 mm open mobile terminal platform (open mobile terminal platform, OMTP) standard interface or a cellular telecommunications industry association of the USA (cellular telecommunications industry association of the USA, CTIA) standard interface.

The motor 380 may generate a vibration prompt. The motor 380 may be configured to provide an incoming call vibration prompt and a touch vibration feedback. In some embodiments, after the electronic device 120 receives the living body leaving-behind information sent by the vehicle 100, the motor 380 in the electronic device 120 may prompt the user through vibration.

In some embodiments, to detect a living body at different positions in a vehicle 100 and reduce complexity of cable deployment in the vehicle 100, a radar apparatus may be integrated into a central control display. In this way, a change in a detection area of the radar apparatus due to loosening of a fastening point of the radar apparatus may be avoided, which may affect a result of living body detection.

The following describes a diagram of a structure of a radar apparatus 110 integrated into a central control display 102 according to this application.

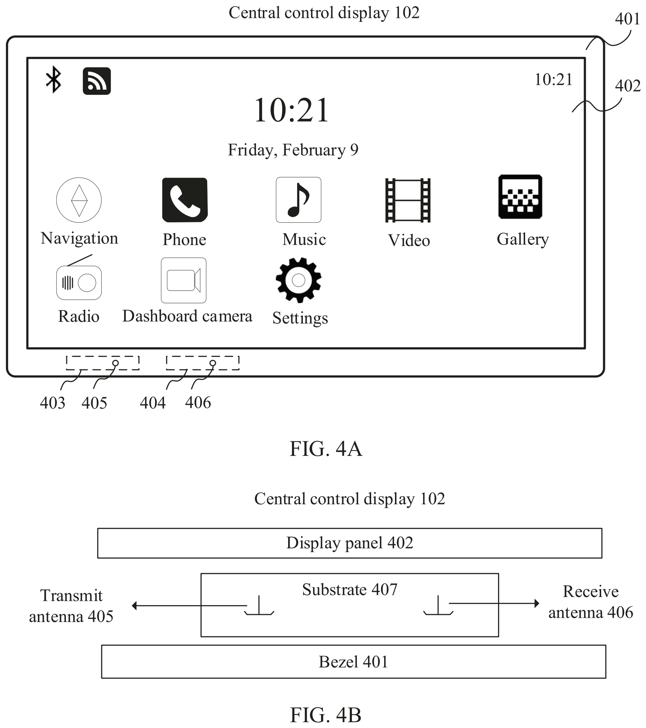

FIG. 4A is a front view of the central control display 102. The central control display 102 may include a bezel 401 and a display panel 402. The display panel 402 may be configured to display a user interface. The bezel 401 of the display may include a first area 403 and a second area 404. A transmit antenna 405 may be disposed inside the first area 403, and a receive antenna 406 may be disposed inside the second area 404. The transmit antenna may also be referred to as a TX antenna, and the receive antenna may also be referred to as an RX antenna. The TX antenna 405 and the RX antenna 406 may be mounted on a same substrate inside the bezel 401. The TX antenna 405 may be configured to transmit a radar signal, and the RX antenna 406 may be configured to receive a radar signal.

In some embodiments, the bezel 401 of the central control display 102 may cover an outer surface of the display panel 402, and encircle the display panel 402 entirely. The bezel 401 may have a specific width. For example, the width of the bezel 401 may be a value such as 0.1 to 1.5 centimeters. A position and a width of the bezel 401 are not limited in this embodiment of this application. For example, the bezel 401 may alternatively be located only on one side of the display panel 402.

In some embodiments, the second area 404 may be at a horizontally central position below the bezel 401, and the first area 403 may be on a left side of the second area 404. In a possible implementation, the first area 403 and the second area 404 may alternatively be above the bezel 401. Arrangement positions of the first area 403 and the second area 404 are not limited in this embodiment of this application.

FIG. 4B is a diagram of an internal structure of the radar apparatus 110 integrated into the central control display 102. The central control display 102 may include, from the inside to the outside, the display panel 402, a substrate 407, and the bezel 401. The substrate 407 may include the transmit antenna 405 and the receive antenna 406 of the radar apparatus 110. The TX antenna 405 in the radar apparatus 110 may transmit a radar signal beam into a cabin through the bezel 401, and the RX antenna 406 may receive an echo signal through the bezel 401.

In some embodiments, one end of a beam transmitted by the TX antenna 405 may be oriented perpendicularly toward the inner surface of the bezel 401, with a point of incidence located in the first area 403 of the bezel 401, as shown in FIG. 4A. One end of a beam received by the RX antenna 406 may be oriented perpendicularly toward the inner surface of the bezel 401, with a point of incidence located in the second area 404 of the bezel 401, as shown in FIG. 4A. The bezel 401 may be made of a material that does not include metal, such as plastic or glass, to reduce signal attenuation of the radar apparatus 110.

In some embodiments, a structure of the central control display 102 may include more or fewer components than those shown in the figure, or some components may be combined, or some components may be split. It may be understood that the structure in this embodiment of this application does not constitute a specific limitation on the structure of the central control display 102.

In some embodiments, the radar apparatus 110 may have more than one TX antenna, and may also have more than one RX antenna. When there is more than one TX antenna, a plurality of TX antennas may transmit and receive signals in a time division multiplexing (time division multiplexing, TDM) manner. The TX antennas and the RX antennas may be sequentially arranged on the substrate 407 in an order from left to right along a length direction of the bezel 401. The arrangement is not limited to from left to right, and may alternatively be another arrangement manner. When the radar apparatus 110 includes a plurality of transmit antennas and a plurality of receive antennas, an arrangement manner of the transmit antennas and the receive antennas is not limited in this embodiment of this application. For ease of description, in subsequent embodiments of this application, a single transmit antenna TX antenna 405 and a single receive antenna RX antenna 406 are used as examples to describe a living body detection method. It may be understood that the radar apparatus 110 may include more TX antennas and more RX antennas. Quantities of TX antennas and RX antennas in the radar apparatus 110 are not limited in this embodiment of this application. The TX antenna 405 and the RX antenna 406 may be patch antennas.

**The following describes diagrams of scenarios in which a radar apparatus 110 is disposed in a vehicle 100 according to this application.**

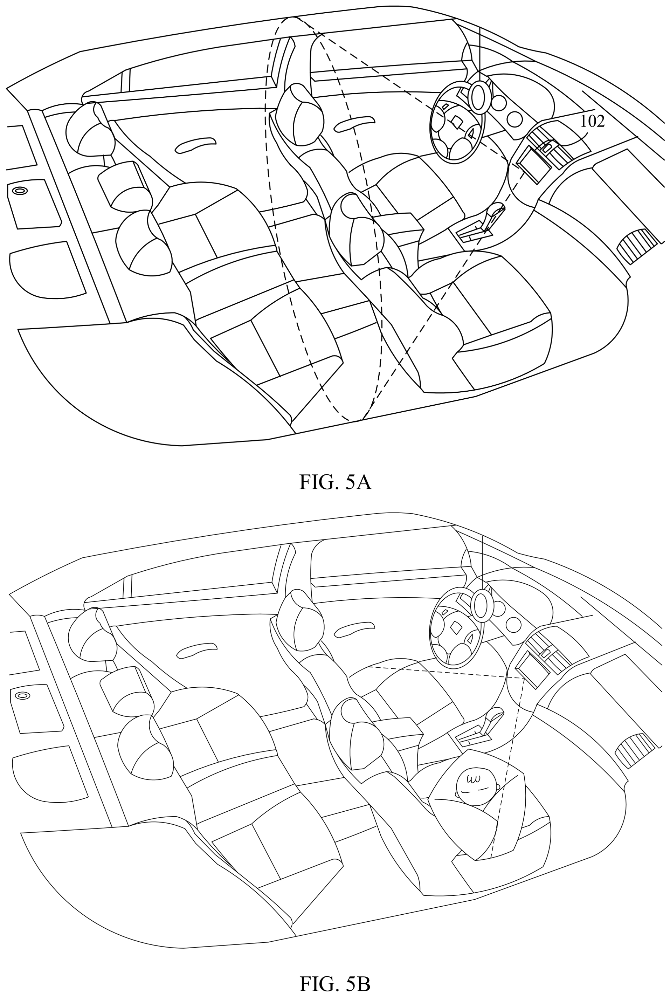

FIG. 5A to FIG. 5D are diagrams of some scenarios in which the radar apparatus in the vehicle transmits a beam according to an embodiment of this application.

As shown in FIG. 5A, the central control display 102 may be embedded in a center console between a driver position and a front passenger position. The central control display 102 is not limited to being embedded in the center console. In a possible implementation, the central control display may alternatively be a floating display, and all or a part of the central control display is disposed above the center console in a protruding manner. A fastening form of the central control display 102 in the vehicle 100 is not limited in this embodiment of this application. A beam transmitted by an antenna of the radar apparatus 110 may be conical. The beam of the antenna of the radar apparatus 110 may use a transmission position as a vertex, to ensure that the beam of the antenna can reach different seats in a cabin, and cover seatbacks and seat bases in the cabin. For example, the radar apparatus 110 is mounted below the bezel 401 of the central control display 102. The TX antenna 405 of the radar apparatus 110 may transmit a linear frequency modulated continuous wave signal, where a beam of the linear frequency modulated signal may be conical. The linear frequency modulated continuous wave signal transmitted by the TX antenna 405 may be reflected by an object, and the RX antenna 406 may receive an echo signal that is obtained after the linear frequency modulation continuous wave signal sent by the TX antenna 405 is reflected by the object. The radar signal transmitted by the TX antenna 405 may reach any position in the vehicle 100 after being reflected once or a plurality of times by the object in the vehicle 100. The radar signal transmitted by the TX antenna 405 and the echo signal received by the RX antenna 406 may be used to perform living body detection at various positions in the vehicle 100.

As shown in FIG. 5B, when an infant exists on a front seat, a signal transmitted by the TX antenna 405 in the radar apparatus 110 may directly reach the infant on the front seat without being blocked by another object. The transmitted signal of the TX antenna 405 may be reflected by the infant. After the transmitted signal is reflected by an object, a signal returned to the radar apparatus 110 may be referred to as an echo signal. The RX antenna 406 may receive an echo signal reflected by the infant. In this way, a central control display MCU 109 and an in-vehicle infotainment system SOC 107 may detect, based on the transmitted signal of the TX antenna 405 and the echo signal received by the RX antenna 406, whether a living body exists on the front seat of the vehicle 100.

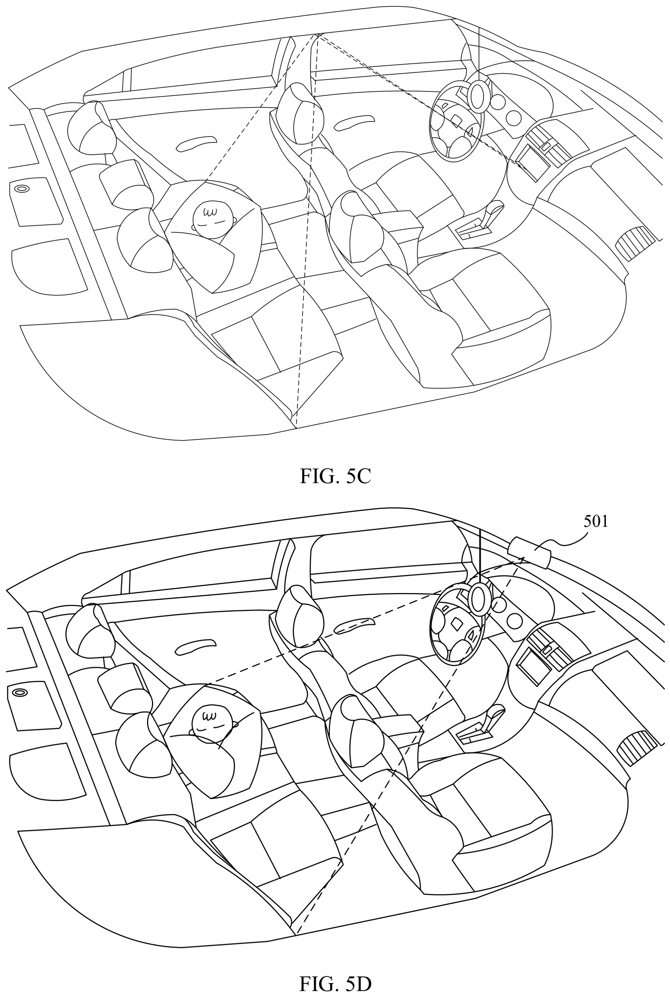

As shown in FIG. 5C, when the infant is on a rear seat, the transmitted signal of the TX antenna 405 in the radar apparatus 110 may not directly reach the infant on the rear seat. The transmitted signal may be reflected by the roof of the vehicle 100, and reach a rear seat area. A radar signal reaching the rear seat area may be reflected by the infant on the rear seat and then received by the RX antenna 406. The radar signal reflected by the baby on the rear seat may be reflected by the roof of the vehicle 100 again and then reach the RX antenna 406. In this way, the central control display MCU 109 and the in-vehicle infotainment system SOC 107 may detect, based on the transmitted signal of the TX antenna 405 and the echo signal received by the RX antenna 406, whether a living body exists on the rear seat of the vehicle 100. A reflection path of the radar signal transmitted by the TX antenna 405 is not limited in this embodiment of this application. For example, the radar signal transmitted by the TX antenna 405 may alternatively be received by the RX antenna 406 according to the following reflection path: reflected from a front driver seat to the infant on the rear seat → reflected from the infant to the roof of the vehicle → reflected from the roof to the RX antenna 406.

In a possible implementation, as shown in FIG. 5D, the radar apparatus 110 may be further mounted in a streaming rearview mirror 501 in the vehicle 100. The streaming rearview mirror 501 may be deployed above the central control display 102 in the vehicle 100. For a structure and a mounting manner of the radar apparatus 110 deployed in the streaming rearview mirror, refer to a structure and a mounting manner of the radar apparatus 110 deployed in the central control display 102 in the foregoing embodiment. Details are not described herein again. Due to a high position of the streaming rearview mirror 501, a beam transmitted by the TX antenna 405 may directly reach the front seat and the rear seat without being blocked by another object.

A radar apparatus 110 in a central control display 102 may transmit a radar signal. The radar signal transmitted by the radar apparatus 110 is reflected by an object in a vehicle 100, and may reach each position of the vehicle 100. The radar signal may be returned to the radar apparatus 110 after being reflected by the object. In this way, a central control display MCU 109 and an in-vehicle infotainment system 101 may process the radar signal, and determine whether a living body exists in the vehicle 100.

**The following specifically describes a flowchart of a living body detection method according to an embodiment of this application.**

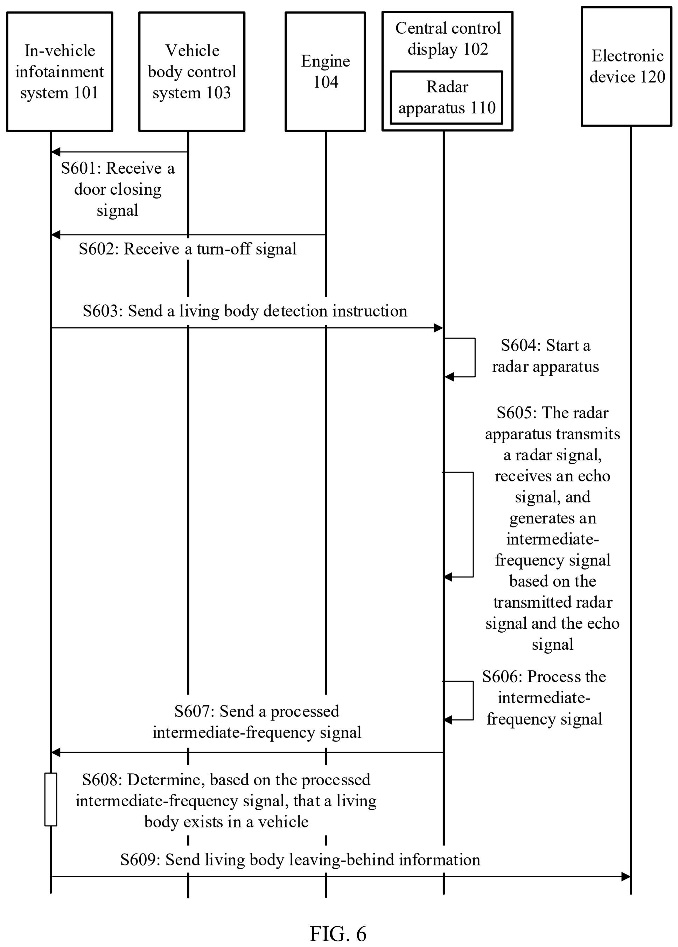

As shown in FIG. 6, the living body detection method provided in this embodiment of this application may include but is not limited to the following steps.

S601: The in-vehicle infotainment system 101 receives a door closing signal.

S602: The in-vehicle infotainment system 101 receives a turn-off signal.

After an engine 104 is turned off, the engine 104 may send a turn-off signal to a CAN bus 200. After a door of the vehicle 100 is closed, a vehicle body control system 103 may send a door closing signal to the CAN bus 200. After receiving the turn-off signal and the door closing signal from the CAN bus 200, the in-vehicle infotainment system 101 may start to perform living body detection. In this way, the vehicle 100 may perform living body detection in a timely manner after the engine is turned off and the vehicle door is closed, to ensure safety of the living body in the vehicle 100.

In some other embodiments, when the in-vehicle infotainment system 101 receives one or more of the following signals: a turn-off signal, a door closing signal, a window closing signal, a fuel filler port closing signal, and a charging port closing signal, the in-vehicle infotainment system 101 may start to perform living body detection. The turn-off signal may indicate that the engine in the vehicle 100 has been turned off. The door closing signal may indicate that a door of the vehicle 100 is closed. The window closing signal may indicate that a window of the vehicle 100 is closed. The fuel filler port closing signal may indicate that a fuel filler port of the vehicle 100 is closed. The charging port closing signal may indicate that a charging port of the vehicle 100 is closed, and the charging port is used to charge the vehicle 100. In this way, the in-vehicle infotainment system 101 may start to detect whether a living body exists in the vehicle 100. The fuel filler port closing signal may be sent by the vehicle body control system 103 to the CAN bus 200 when the fuel filler port in the vehicle 100 is closed. The charging port closing signal may be sent by the vehicle body control system 103 to the CAN bus 200 when the charging port in the vehicle 100 is closed. It may be understood that the vehicle 100 may start living body detection in a cabin of the vehicle 100 after the vehicle is turned off and the door is closed. In addition to turn-off of the vehicle and closing of the door, the vehicle 100 may alternatively start living body detection when the window, the fuel filler port, and the charging port are all closed. In this way, disturbance to a vehicle owner can be avoided when the vehicle owner merely temporarily leaves the vehicle 100 and living body detection does not need to be performed in the cabin of the vehicle 100. In addition, when the vehicle 100 performs living body detection as the window, the fuel filler port, and the charging port are all closed, impact of external environment interference on accuracy of living body detection of the vehicle 100 can be further reduced, and false alarms are avoided.

In a possible implementation, the vehicle 100 may further include a temperature sensor. After receiving the turn-off signal and the door closing signal, the vehicle 100 may perform living body detection when the temperature sensor detects that a temperature in the cabin is above 30 degrees or below 10 degrees. In this way, when the temperature in the vehicle 100 is excessively high or excessively low, whether a living body exists in the vehicle 100 can be detected in a timely manner.

S603: The in-vehicle infotainment system 101 sends a living body detection instruction to the central control display 102.

After receiving the turn-off signal and the door closing signal, the in-vehicle infotainment system 101 may send the living body detection instruction to the central control display 102, to start to detect whether a living body exists in the vehicle 100.

In a possible implementation, an in-vehicle infotainment system SOC 107 in the in-vehicle infotainment system 101 may send the living body detection instruction to a serializer 106. After processing the living body detection instruction, the serializer may send a processed living body detection instruction to a deserializer 108 of the central control display 102 through an I2C. The central control display MCU 109 in the central control display 102 may read a living body detection instruction processed by the deserializer 108, and determine to start living body detection inside the vehicle 100.

In some embodiments, after receiving the turn-off signal and the door closing signal, the in-vehicle infotainment system 101 may wait a first time period and then send the living body detection instruction to the central control display 102. This can reduce impact of swinging of an ornament in the vehicle on accuracy of living body detection by the radar apparatus 110. The first time period may be 5 seconds.

S604: The central control display 102 starts the radar apparatus 110.

After determining that living body detection needs to be performed inside the vehicle 100, the central control display MCU 109 in the central control display 102 may send a start instruction to the radar apparatus 110.

In some embodiments, the central control display MCU 109 may send a start instruction to the radar apparatus 110 a plurality of times. For example, after receiving the living body detection instruction sent by the in-vehicle infotainment system 101, the central control display 102 may start the radar apparatus 110 once every 5 minutes within 30 minutes.

In some embodiments, after receiving the living body detection instruction sent by the in-vehicle infotainment system 101, the central control display MCU 109 may send the start instruction to the radar apparatus 110 after a second time period. This can reduce impact of swinging of the ornament in the vehicle on accuracy of living body detection by the radar apparatus 110. The second time period may be 5 seconds.

S605: The radar apparatus transmits a radar signal, receives an echo signal, and generates an intermediate-frequency signal based on the transmitted radar signal and the echo signal.

After the radar apparatus 110 receives the start instruction sent by the central control display MCU 109, a TX antenna 405 may transmit the radar signal, and an RX antenna 406 may receive the echo signal. The echo signal is a signal that is returned to the RX antenna 406 after the radar signal transmitted by the TX antenna 405 is reflected by an object.

In some embodiments, the radar apparatus 110 may include a frequency synthesizer. The frequency synthesizer may be configured to generate the radar signal transmitted by the TX antenna 405. The radar signal transmitted by the TX antenna 405 may be a linear frequency modulated continuous wave signal.

In some embodiments, after receiving the start instruction of the central control display 102, the radar apparatus 110 may transmit a radar signal for first duration. The first duration may be, for example, 20 seconds, 30 seconds, or the like. A value of the preset duration is not limited in embodiments of this application. The radar apparatus 110 may divide signal frames based on the transmitted radar signal and the received echo signal. The radar apparatus 110 may divide radar signals transmitted within second duration and echo signals reflected for the radar signals transmitted within the second duration into one frame of signals. A value of the second duration is less than a value of the first duration. For example, the second duration may be 50 milliseconds, 100 milliseconds, or the like. The value of the second duration is not limited in embodiments of this application.

For example, the value of the first duration is 30 seconds. The value of the second duration is 50 milliseconds. The TX antenna 405 of the radar apparatus 110 may transmit linear frequency modulated continuous wave signals a plurality of times within 30 seconds, and the RX antenna 406 may receive echo signals reflected for the signals transmitted within the 30 seconds. The radar apparatus 110 may divide the transmitted and received radar signals into 600 frames of signals. A frame of signals may include radar signals transmitted within 50 milliseconds and echo signals reflected for the radar signals transmitted within the 50 milliseconds.

In some embodiments, the radar apparatus 110 may include a frequency mixer. After the radar apparatus 110 transmits one radar signal, a received echo signal may be a combination of echo signals reflected by one or more objects. The frequency mixer may perform frequency mixing on the transmitted signal and the echo signal that is obtained after the same transmitted signal is reflected by a plurality of objects, to obtain a mixed signal. Further, the radar apparatus 110 may perform low-pass filtering on the mixed signal, and extract, from the mixed signal, an intermediate-frequency signal that needs to be used in subsequent living body detection. In other words, a quantity of intermediate-frequency signals obtained by the radar apparatus 110 may be related to a quantity of times that the radar apparatus 110 transmits radar signals. For example, the radar apparatus 110 transmits radar signals k1 times. The radar apparatus 110 may obtain k1 intermediate-frequency signals based on the k1 radar signals and corresponding echo signals.

A frequency of the intermediate-frequency signal may be a frequency difference between the transmitted signal and the echo signal, and a phase may be a phase difference between the transmitted signal and the echo signal. For example, a signal transmitted by the radar apparatus 110 may be $x_1 = \sin(2\pi f_1 t + \theta_1)$, and an echo signal received for the signal may be $x_2 = \sin(2\pi f_2 t + \theta_2)$. $f_1$ may be an instantaneous frequency of the transmitted signal, and $f_2$ may be an instantaneous frequency of the echo signal. $\theta_1$ may be an instantaneous phase of the transmitted signal, and $f_2$ may be an instantaneous phase of the echo signal. A final output intermediate-frequency signal may be $x_{out} = \sin(2\pi(f_1 - f_2)t + (\theta_1 - \theta_2))$.

S606: The central control display 102 processes the intermediate-frequency signal.

After obtaining the intermediate-frequency signal, the radar apparatus 110 may send the intermediate-frequency signal to the central control display MCU 109 in the central control display 102. The central control display MCU 109 may process the intermediate-frequency signal. A process of processing the intermediate-frequency signal by the central control display MCU 109 may include: intermediate-frequency signal sampling, range FFT computation, and range-bin truncation.

The following describes the process of processing the intermediate-frequency signal by the central control display MCU 109.

1. Intermediate-frequency signal sampling

The intermediate-frequency signal obtained after frequency mixing by the radar apparatus 110 is an analog signal. The central control display MCU 109 in the central control display 102 may sample the foregoing intermediate-frequency signal to convert the analog signal into a digital signal. This can facilitate analysis and processing of the intermediate-frequency signal by the central control display MCU 109.

In some embodiments, to perform a complex number operation, the radar apparatus 110 may include a quadrature receiver. The quadrature receiver may mix in-phase and quadrature signals of the transmitted signal and the received echo signal, to generate an intermediate-frequency signal. The in-phase signal is a real part of a signal spectrum, and the quadrature signal is an imaginary part of the signal spectrum. The intermediate-frequency signal may be a complex exponential signal, including two orthogonal baseband signals: an I signal and a Q signal. The I signal may store an imaginary part of the intermediate-frequency signal, and the Q signal may store a real part of the intermediate-frequency signal. Correspondingly, the central control display MCU 109 may include two digital-to-analog converters. Then, the central control display MCU 109 may simultaneously sample I/Q baseband signals of the intermediate-frequency signal to convert the intermediate-frequency signal into a digital signal. This facilitates separate operation on the real and imaginary parts of the intermediate-frequency signal by the central control display MCU 109 while retaining phase information of the intermediate-frequency signal. There may be a difference between sampling in the two channels, causing glitches in the sampled intermediate-frequency signal. In this case, deglitching needs to be performed on the intermediate-frequency signal. After an intermediate-frequency signal originally in an analog signal form is sampled, an intermediate-frequency signal in a digital signal form may be obtained. The sampled intermediate-frequency signal may be represented by a radar data cube.

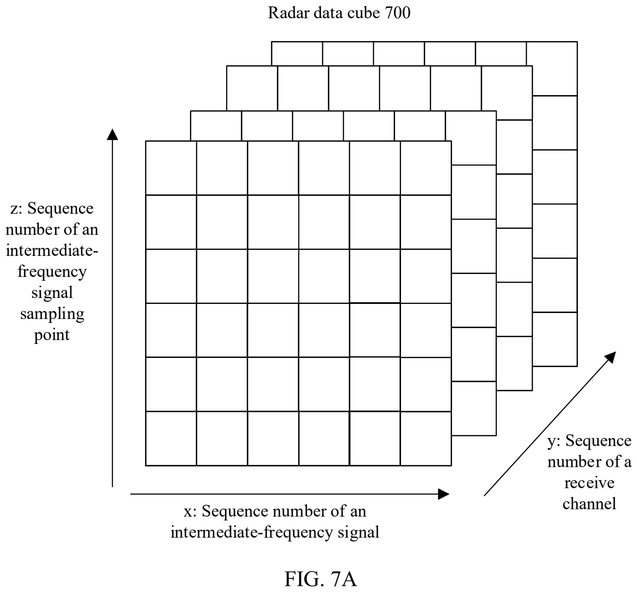

FIG. 7A is a diagram of an example of a radar data cube 700.

As shown in FIG. 7A, the radar data cube 700 may represent one frame of intermediate-frequency signal data. One frame of intermediate-frequency signals may be obtained by mixing one frame of radar signals transmitted by the radar apparatus 110 with echoes of the frame of radar signals. In the radar data cube 700, an x-axis direction may represent a sequence number of an intermediate-frequency signal, a y-axis direction may represent a sequence number of a receive channel, and a z-axis direction may represent a sequence number of an intermediate-frequency signal sampling point. A quantity of intermediate-frequency signals of the radar data cube 700 may be determined based on a quantity of intermediate-frequency signals included in one frame of intermediate-frequency signal data. That is, a quantity of columns of the radar data cube 700 on the x-axis may be equal to the quantity of intermediate-frequency signals included in one frame of intermediate-frequency signal data. A quantity of receive channels of the radar data cube 700 may be determined based on a quantity of RX antennas in the radar apparatus 110. Data received on one receive channel may be data received by one RX antenna in the radar apparatus 110. The RX antenna in the radar apparatus 110 may be a physical antenna or a virtualized antenna. That is, a quantity of data block planes included in the radar data cube on the y-axis may be the quantity of RX antennas in the radar apparatus 110. Data blocks on one data block plane may be obtained based on data received by one RX antenna. A quantity of rows of the radar data cube 700 on the z-axis may be equal to a quantity of points at which the intermediate-frequency signal is sampled. One data block in the radar data cube 700 may represent data at one sampling point in one intermediate-frequency signal that is obtained by one receive channel. The data at the sampling point may include data at corresponding sampling points in the I signal and the Q signal of the intermediate-frequency signal.

The radar data cube 700 may include a plurality of data blocks. A quantity of data blocks in the radar data cube 700 may be determined based on the quantity of intermediate-frequency signals, the quantity of receive channels, and the quantity of sampling points of the intermediate-frequency signal in the radar data cube 700. That is, the quantity of data blocks = the quantity of intermediate-frequency signals * the quantity of receive channels * the quantity of sampling points of the intermediate-frequency signal. One data block may represent an amplitude value of an intermediate-frequency signal corresponding to the data block at one sampling point. The intermediate-frequency signal corresponding to the foregoing data block may be obtained by processing such as frequency mixing and low-pass filtering based on one radar signal transmitted by the radar apparatus 110 and an echo signal reflected for the radar signal and received by one RX antenna in the radar apparatus 110.

2. Range FFT computation

The central control display MCU 109 may perform range FFT computation on the sampled intermediate-frequency signal. The central control display MCU 109 may perform N-point fast Fourier transform computation on the intermediate-frequency signal. N may be the quantity of sampling points of the intermediate-frequency signal. A frequency $S_\tau$ of the intermediate-frequency signal may be expressed as: $S_\tau = \mu\tau = \mu 2d/c$. Herein, $\mu$ is a frequency modulation slope, d is a distance for a radar signal to reach a target in the vehicle 100, and c is the speed of electromagnetic wave propagation. Then, a formula for calculating the distance for the radar signal to reach the target in the vehicle 100 is $d = cS_\tau/2\mu$. Herein, $\mu$ may be obtained by dividing a bandwidth B of a linear frequency modulated continuous wave by duration T. Because the bandwidth B and the duration T of the linear frequency modulated continuous wave may be set, $\mu$ may be set manually. Because the speed c of electromagnetic wave propagation is a fixed value, a distance from the target to the radar apparatus is mainly affected by the frequency $S_\tau$ of the intermediate-frequency signal. The distance d is directly proportional to the frequency $S_\tau$ of the intermediate-frequency signal. Therefore, once the frequency $S_\tau$ of the inter-mediate-frequency signal is calculated, the distance d for the radar signal to reach the target in the vehicle 100 can be obtained. Therefore, after the range FFT computation is performed on the intermediate-frequency signal, because the frequency of the intermediate-frequency signal may correspond to different distances from the radar apparatus to the vehicle 100, amplitude values of intermediate-frequency signals corresponding to objects at different distances can be obtained.

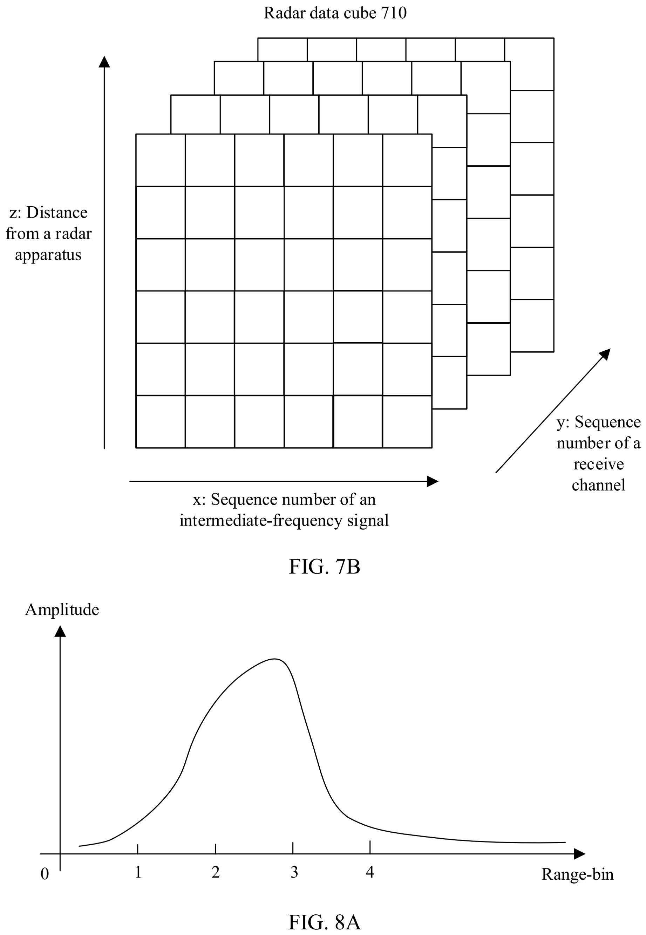

After performing the range FFT computation on the intermediate-frequency signal, the central control display may obtain amplitude values of the intermediate-frequency signal corresponding to objects at different distances. The amplitude values of the intermediate-frequency signal corresponding to the objects at different distances may be represented by a radar data cube 710 shown in FIG. 7B. A data block in the radar data cube 710 shown in FIG. 7B may be obtained after FFT computation is performed on a data block at a same position in the radar data cube 700 shown in FIG. 7A. The radar data cube 710 may also include a plurality of data blocks, where each data block may represent an FFT result of the intermediate-frequency signal at a sampling point corresponding to the data block. The data block in the radar data cube 710 may also be referred to as a range-bin. In the radar data cube 710, a sequence of data blocks in the x-axis direction may represent a sequence number of an intermediate-frequency signal, and a sequence of data blocks in the y-axis direction may represent a sequence number of a receive channel of the radar apparatus 110. A sequence of data blocks in the z-axis direction may represent a distance from the radar apparatus.

In the radar data cube 710, a distance corresponding to one range-bin in the z-axis direction is a minimum distance at which the radar apparatus can distinguish between two targets when the two targets are along the same direction of the radar apparatus but at different distances from the radar apparatus, that is, the magnitude of a range resolution of the radar apparatus 110. Each time one range-bin is added in the z-axis direction, one distance equal to the range resolution is correspondingly added. For example, when the range resolution is 0.6 meter, the 1st range-bin in the positive direction of the z-axis is an amplitude value of an intermediate-frequency signal corresponding to a target that the radar signal reaches after 0-0.6 meter. The 1st range-bin in the positive direction of the z-axis is an amplitude value of an intermediate-frequency signal corresponding to a target that the radar signal reaches after 0.6-1.2 meters. The range resolution of the radar apparatus 110 is related to the bandwidth of the linear frequency modulated continuous wave signal. A calculation formula of the range resolution of the radar apparatus 110 may be: $\Delta R = c/2B$. Herein, $c$ is the speed of electromagnetic wave propagation, and $B$ is the bandwidth of the linear frequency modulated continuous wave. The bandwidth of the linear frequency modulated continuous wave is directly proportional to the range resolution of the radar apparatus 110. A larger bandwidth of the linear frequency modulated continuous wave transmitted by the radar apparatus indicates a higher range resolution. It may be understood that when the bandwidth of the radar apparatus 110 changes, the range resolution of the radar apparatus 110 changes accordingly. To adapt to the size of the vehicle 100, the radar apparatus 110 may have different range resolutions. The range resolution of the radar apparatus 110 is not limited in embodiments of this application. Using a data block plane in which a receive channel in the radar data cube 710 is located as an example, a same row of data blocks may indicate changes of data of the intermediate-frequency signal at a same distance from the radar apparatus with the sequence number of the intermediate-frequency signal. The sequence number of the intermediate-frequency signal increases in ascending order with time. Therefore, the same row of data blocks may indicate the changes of the data of the intermediate-frequency signal at the same distance from the radar apparatus with time. A same column of data blocks may represent data of the intermediate-frequency signal corresponding to different distances at a same time. FIG. 8A is a diagram of a distance spectrogram of an intermediate-frequency signal after range FFT computation. A horizontal axis of the distance spectrogram may be referred to as an x-axis, and a vertical axis may be referred to as a y-axis. The diagram of the distance spectrogram shown in FIG. 8A may be considered as a representation form of a column of range bins for one receive channel in the radar data cube 710 on the x-y coordinate axes. An abscissa of the distance spectrogram shown in FIG. 8A may be a sequence number of a range-bin, and an ordinate may be an amplitude value of an intermediate-frequency signal. Any column of a receive channel in the radar data cube 710 may include N range-bins, and a maximum value of an abscissa in the distance spectrogram shown in FIG. 8A may be N. As the sequence number of the range-bin increases, a distance between a corresponding target and the radar apparatus 110 also increases. For example, when the range resolution is 60 centimeters, one range-bin may correspond to 60 centimeters. Therefore, when the sequence number of the range-bin is 1, a value of an ordinate of the image of the distance spectrogram when the abscissa is 1 represents an amplitude value of an intermediate-frequency signal when a distance between the target and the radar apparatus 110 is 60 centimeters. Then the sequence number of the range-bin is 2, a value of an ordinate of the image of the distance spectrogram when the abscissa is 2 may represent an amplitude value of an intermediate-frequency signal when a distance between the target and the radar apparatus 110 is 120 centimeters. In this way, a row of range-bins in the radar data cube 710 may be considered as changes of the amplitude of the intermediate-frequency signal with respect to the distance between a target and the radar apparatus 110.

3. Range-bin truncation

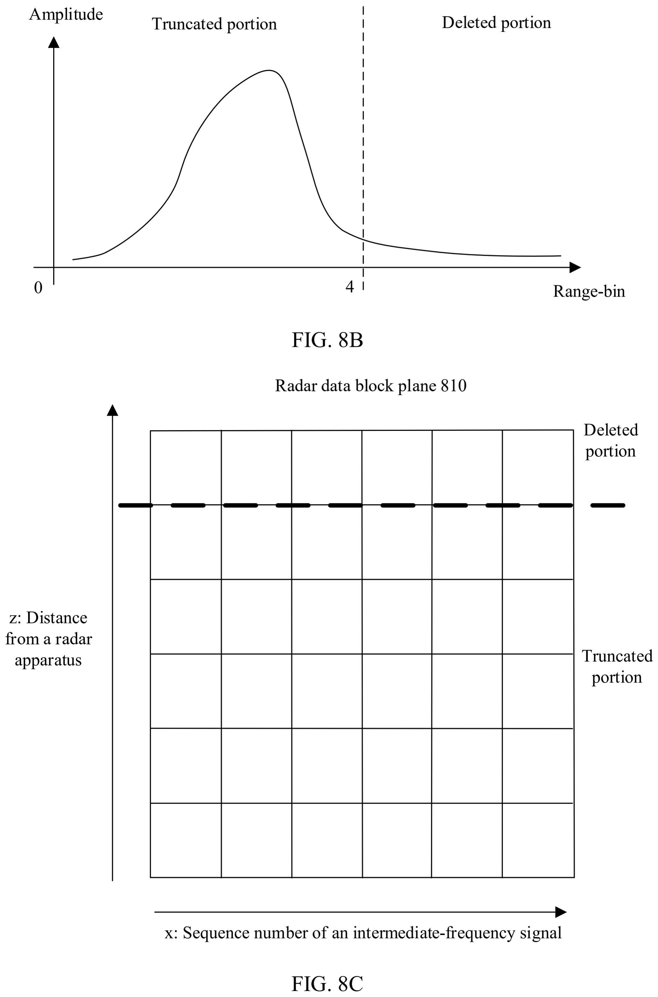

In some embodiments, the central control display 102 may truncate data obtained after the range FFT of the intermediate-frequency signal, and delete data corresponding to the range-bin of a relatively long distance. The truncated data may be related to the range resolution of the radar apparatus 110 and a monitoring range in the cabin of the vehicle 100. In a possible implementation, the monitoring range in the cabin of the vehicle 100 may be a maximum distance from the radar apparatus 110 to a rear seat. The distance is not limited, and may be another distance. The monitoring range in the cabin of the vehicle 100 may also be a distance from the radar apparatus 110 to a trunk door. Setting of the monitoring range in the cabin of the vehicle 100 is not limited in embodiments of this application. For example, as shown in FIG. 8B, the range resolution of the radar apparatus 110 may be 60 centimeters, and the monitoring range in the cabin of the vehicle 100 may be 2.3 meters. When the sequence number of the range-bin is 4, the value of the y-axis in the waveform diagram indicates the amplitude value of the intermediate-frequency signal when the distance between the target and the radar apparatus 110 is 240 centimeters. Because 240 centimeters is greater than 2.3 meters, a 0th to a 4th range-bins can cover the monitoring range in the cabin of the vehicle 100. As shown in FIG. 8B, an abscissa corresponding to the dashed line is range-bin=4. Data on the left of the dashed line may be a truncated portion to be obtained by the central control display MCU 109, and data on the right of the dashed line may be data to be deleted by the central control display MCU 109. It may be understood that a signal transmitted by the radar apparatus may be received by the RX antenna after being reflected for a plurality of times. In this way, the calculated distance exceeds the cabin monitoring range. The central control display MCU 109 can delete range-bin data that exceeds the range of the cabin monitoring distance, thereby reducing the computational amount and improving the efficiency of living body detection.

A radar data block plane 810 shown in FIG. 8C may be a data block plane corresponding to a receive channel in the radar data cube 710 shown in FIG. 7B. The radar data block plane 810 may include x-axis and z-axis directions. The x-axis direction may represent a sequence number of an intermediate-frequency signal, and the z-axis direction may represent a distance from the radar apparatus. For descriptions of the x-axis and the z-axis in the radar data block plane 810, refer to descriptions of the x-axis and the z-axis in the radar data cube 710. Details are not described herein again. As shown in FIG. 8C, the radar data block plane 810 is divided into two portions by the dashed line. The portion above the dashed line is the deleted portion. The deleted data blocks may represent range-bin data that is deleted by the central control display MCU 109 and that exceeds the range of the cabin monitoring distance. The portion below the dashed line in the radar data block plane 810 is the truncated portion. The truncated data blocks may represent range-bin data of the range of the cabin monitoring distance that is truncated by the central control display MCU 109. The data blocks of the deleted portion of the radar data block plane 810 may correspond to the range-bin data of the deleted portion shown in FIG. 8B. The data blocks of the truncated portion of the radar data block plane 810 may correspond to the range-bin data of the truncated portion shown in FIG. 8B.

In some embodiments, to eliminate impact of shaking of the ornament in the vehicle 100 on accuracy of the determining result, the in-vehicle infotainment system SOC 107 may further delete a range-bin corresponding to a short distance. For example, a distance between the radar apparatus 110 and the ornament in the vehicle may be 50 cm. In this case, the in-vehicle infotainment system SOC 107 may delete a $0^{th}$ and a $1^{st}$ piece of range-bin data. In this way, the impact of the shaking of the ornament in the vehicle within the 60 cm range of the radar apparatus on the accuracy of subsequent living body detection can be eliminated.

As shown in FIG. 8A to FIG. 8C, range-bin truncation may also be referred to as selection of the range-bins in the distance dimension.

S607: The central control display 102 sends a processed intermediate-frequency signal to the in-vehicle infotainment system 101.

After processing the intermediate-frequency signal, the central control display MCU 109 in the central control display 102 may send the processed intermediate-frequency signal to the in-vehicle infotainment system 101. The processed intermediate-frequency signal may include range-bin data corresponding to the cabin monitoring range that is extracted by the central control display MCU 109 after sampling and range FFT computation are performed on the intermediate-frequency signal.

The central control display MCU 109 may perform sampling and range FFT computation on a plurality of frames of intermediate-frequency signals. One frame of intermediate-frequency signals may include a plurality of intermediate-frequency signals. After the range FFT computation is performed on each intermediate-frequency signal, a range-bin set may be obtained. The foregoing range-bin set corresponds to a column of range-bins in the range-bin plane corresponding to a same receive channel in the radar data cube 710. In some embodiments, to reduce a computational amount, the central control display MCU 109 may select some range-bin sets from one frame of data and send the range-bin sets to the in-vehicle infotainment system 101. In this way, in step S606, to reduce processed objects, the central control display MCU 109 may truncate only the range-bin set to be sent, and does not process other range-bin sets.

In a possible implementation, the central control display MCU 109 may send the first piece of range-bin data in each frame to the in-vehicle infotainment system 101. This may be considered as sending the leftmost column of range-bin data in the frontmost range-bin plane of the radar data cube 710 to the in-vehicle infotainment system 101. It may be understood that the radar data cube 710 is one frame of range-bin data. The central control display MCU 109 may select one range-bin set from the plurality of range-bin sets in each frame and send the range-bin set to the in-vehicle infotainment system 101. The first range-bin set in each frame is not limited, and may also be another range-bin set in each frame. The range-bin set selected by the central control display MCU 109 is not limited in embodiments of this application. In another possible implementation, the central control display MCU 109 may further randomly select and send n range-bin sets from each frame to the in-vehicle infotainment system 101, where n is any positive integer greater than 0 and less than a total quantity of range-bin sets in one frame.

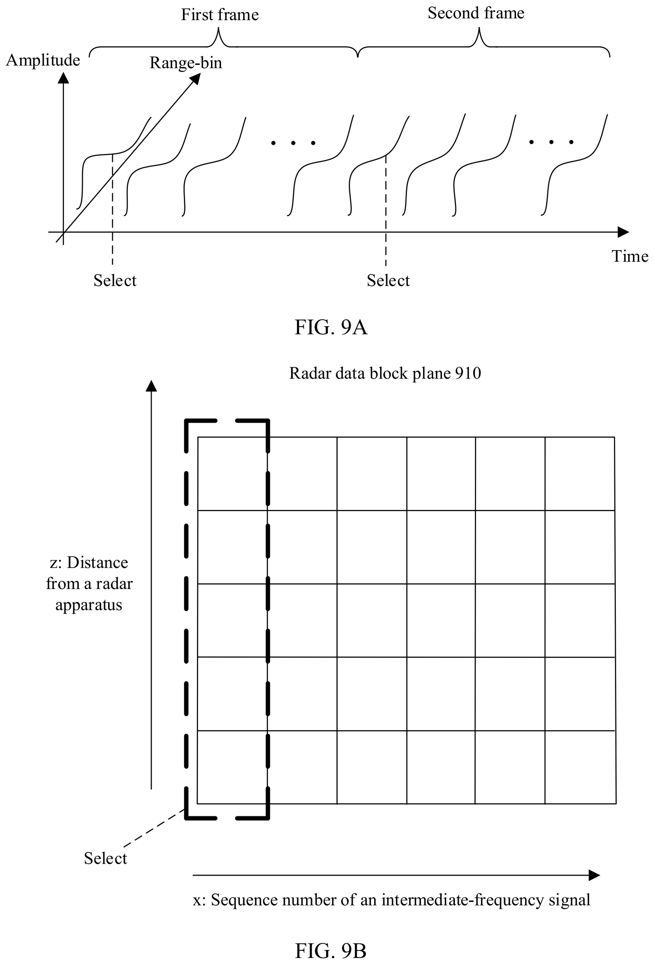

For example, FIG. 9A shows a time sequence distance spectrogram of a range-bin set processed by the central control display MCU 109. A horizontal axis of the time sequence distance spectrogram may be referred to as an x-axis, and a vertical axis may be referred to as a y-axis. Because the range-bin is obtained by performing range FFT computation after an echo signal is mixed with a transmitted signal, an x-axis coordinate in the time sequence distance spectrogram may indicate a time at which the RX antenna 406 receives an echo signal corresponding to the range-bin set. The y-axis coordinate in the time sequence distance spectrogram may be a sequence number of a range-bin in a range-bin set. The z-axis coordinate in the time sequence distance spectrogram may be an amplitude value of an intermediate-frequency signal corresponding to the echo signal. For a waveform represented by the y-axis and the z-axis in the time sequence distance spectrogram shown in FIG. 9A, refer to the description of the distance spectrogram in FIG. 8A. It may be understood that the distance spectrogram shown in FIG. 8A corresponds to a result obtained by performing range FFT computation on an intermediate-frequency signal. For the time sequence distance spectrogram shown in FIG. 9A, results obtained by performing range FFT computation on a plurality of intermediate-frequency signals are represented in a same diagram. FIG. 9A shows a manner in which the central control display MCU 109 selects distance spectrum data in a first frame and a second frame. The first frame may be one frame of range-bin set data obtained by processing a first frame of echo signal received by the radar apparatus 110. The central control display MCU 109 may select and send a first range-bin set in each frame to the in-vehicle infotainment system 101. It may be understood that the radar apparatus 110 may further receive more frame of echo signals. For a method for selecting range-bin data obtained by processing the other frames of echo signals, refer to the method for selecting a range-bin set in the first frame and the second frame. Details are not described herein again.

As shown in FIG. 9B, a time sequence distance spectrogram for selecting a frame of intermediate-frequency signal in the time sequence distance spectrogram shown in FIG. 9A may be represented in the form of a radar data block plane 910. The radar data block plane 910 may also be considered to be obtained by truncating the radar data block plane 810 shown in FIG. 8C. The radar data block plane 910 may include x-axis and z-axis directions. The x-axis direction may represent a sequence number of an intermediate-frequency signal, and the z-axis direction may represent a distance from the radar apparatus. For descriptions of the x-axis and the z-axis in the radar data block plane 910, refer to descriptions of the x-axis and the z-axis in the radar data block plane 810. Details are not described herein again. As shown in FIG. 9B, in one frame of intermediate-frequency signals, the central control display MCU 109 may select and send a range-bin corresponding to one of the intermediate-frequency signals to the in-vehicle infotainment system 101. Data blocks enclosed in the dashed-line box in the radar data block plane 910 may be range-bins finally selected from one frame of range-bin set and sent to the in-vehicle infotainment system 101. The range-bins sent by the central control display MCU 109 to the in-vehicle infotainment system 101 may include only range-bins of an effective cabin monitoring range, that is, a truncated portion of range-bins.

As shown in FIG. 9A, selecting of the range-bins may also be referred to as selection of the range-bins in the time dimension.

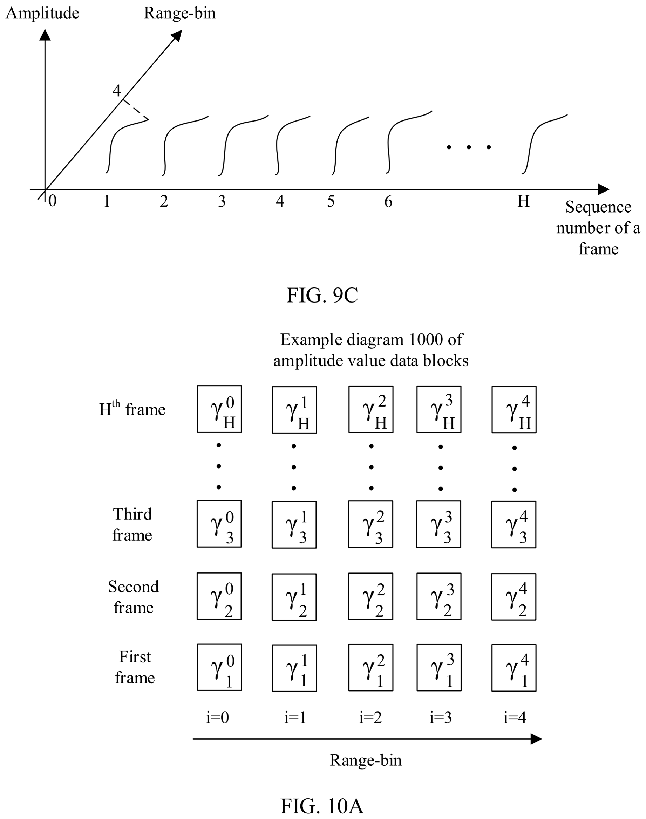

FIG. 9C may be a frame quantity distance spectrogram corresponding to data finally sent by the central control display MCU 109 to the in-vehicle infotainment system 101. A horizontal axis of the frame quantity distance spectrogram may be referred to as an x-axis, and a vertical axis may be referred to as a y-axis. The y-axis coordinate in the frame quantity distance spectrogram may be a sequence number of a range-bin in a range-bin set. The z-axis coordinate in the frame quantity distance spectrogram may be an amplitude value of an intermediate-frequency signal corresponding to the echo signal. The x-axis in the frame quantity distance spectrogram may indicate a sequence number of a frame corresponding to the range-bin. For example, when the x-axis coordinate is 1, it indicates that the range-bin set is obtained by selecting one of all range-bin sets in the first frame. If the radar apparatus 110 receives a total of H frames of echo signals within a start time, the central control display MCU 109 may send H range-bin sets to the in-vehicle infotainment system 101. Before sending the H range-bin sets to the in-vehicle infotainment system 101, the central control display MCU 109 may truncate data in the monitoring range of the cabin of the vehicle 100. For example, the central control display MCU 109 may truncate range-bins with sequence numbers 0 to 4 in the range-bin set, to reduce the computational amount. For ease of description, in subsequent embodiments of this application, the living body detection method is described by using the range-bin sequence numbers 0 to 4. It may be understood that for cabin monitoring ranges of different vehicles 100, there may be different truncation ranges for range-bin sets.

It may be understood that, the central control display MCU 109 may select, from range-bin data obtained by performing range FFT computation on one frame of intermediate-frequency signals, range-bin data corresponding to one intermediate-frequency signal, and send the range-bin data to the in-vehicle infotainment system 101. In addition, the central control display MCU 109 may further truncate the range-bins obtained by performing range FFT computation on the intermediate-frequency signal, and select and send a range-bin within an effective monitoring range of the cabin to the in-vehicle infotainment system 101. In this way, a problem of how the central control display MCU 109 transmits data to the in-vehicle infotainment system 101 when a data transmission amount from the central control display MCU 109 to the in-vehicle infotainment system 101 is limited can be resolved, so that the in-vehicle infotainment system 101 can determine whether a living body exists in the vehicle 100.

S608: The in-vehicle infotainment system 101 determines, based on the processed intermediate-frequency signal, that a living body exists in the vehicle.

The in-vehicle infotainment system 101 may receive the processed intermediate-frequency signal sent by the central control display 102. Further, the in-vehicle infotainment system SOC 107 in the in-vehicle infotainment system 101 may determine, based on the processed intermediate-frequency signal, whether a living body exists in the cabin of the vehicle 100. The processed intermediate-frequency signal may include range-bin data that is truncated by the central control display MCU 109 and that reflects radar signal features within the cabin monitoring range.

In some embodiments, the in-vehicle infotainment system SOC 107 may obtain a time-domain feature or a frequency-domain feature of a range-bin in the cabin monitoring range of the vehicle 100. The time-domain feature of the range-bin may include: an average and a variance of amplitude differences of the range-bin in a time period T, and an average and a variance of cumulative phase differences of the range-bin in the time period T. T may be a size of a detection time window. The frequency-domain feature of the range-bin may include: a change frequency of amplitude differences of the range-bin in the time period T and a change frequency of cumulative phase differences of the range-bin in the time period T. The in-vehicle infotainment system SOC 107 may determine, based on the foregoing range-bin time-domain feature or frequency-domain feature, whether a living body exists in the monitoring range of the cabin of the vehicle 100.

The following first describes a method for determining, by the in-vehicle infotainment system based on the range-bin time-domain feature, whether a living body exists in the vehicle 100.

A method for determining, by the in-vehicle infotainment system SOC 107, whether a living body exists in the vehicle 100 may specifically include the following several steps:

1. Calculate an amplitude and a phase of a range-bin

The in-vehicle infotainment system SOC 107 may calculate an amplitude and a phase of a range-bin in each range-bin set obtained from the central control display 102. An amplitude of a range-bin corresponding to a monitoring distance is an amplitude value of an intermediate-frequency signal at a frequency corresponding to the monitoring distance. The central control display can obtain phases of different range-bins by using an arctangent function and phase unwrapping. For example, the range-bin set received by the in-vehicle infotainment system SOC 107 may include those extracted from one frame of range-bin set by the central control display MCU 109. Amplitude values of a range-bin set obtained by the in-vehicle infotainment system SOC 107 at a $t^{th}$ frame may be represented as $[\gamma_t^0, \gamma_t^1, ..., \gamma_t^k]$, and phase values may be represented as $[\theta_t^0, \theta_t^1, ..., \theta_t^k]$. k is a maximum value of the sequence number of the range-bin. For example, when the sequence number of the range-bin being 4 corresponds to a maximum cabin monitoring range of the vehicle 100, k=4. The in-vehicle infotainment system SOC 107 may obtain amplitude values of different range-bins in each frame. Amplitude values of different range-bins in each frame correspond to amplitude values of intermediate-frequency signals corresponding to different distances from the radar apparatus 110. Amplitude values of different range-bins in each frame obtained by the in-vehicle infotainment system SOC 107 may be represented as an example diagram of amplitude value data blocks shown in FIG. 10A. The example diagram of amplitude value data blocks includes a plurality of data blocks. In a horizontal direction of the data blocks, a sequence number of the range-bin of the data block may be in ascending order from left to right. For example, a sequence number of a range-bin of the first column of data blocks may be 0, which indicates amplitude values of a range-bin signal whose distance is 0 in different frames. In a vertical direction of the data blocks, a sequence number of the frame quantity may be in ascending order from bottom to top. For example, the uppermost column may be amplitude values corresponding to different range-bins in the $t^{th}$ frame. It may be understood that different range-bins correspond to different distances from a target to the radar apparatus 110. Therefore, the uppermost column may represent amplitude values of intermediate-frequency signals corresponding to targets at different distances from the radar apparatus 110 in an $H^{th}$ frame. For a method for representing a phase of a range-bin, refer to the method for representing an amplitude of a range-bin shown in FIG. 10A. Details are not described herein again.

2. Divide different detection time windows

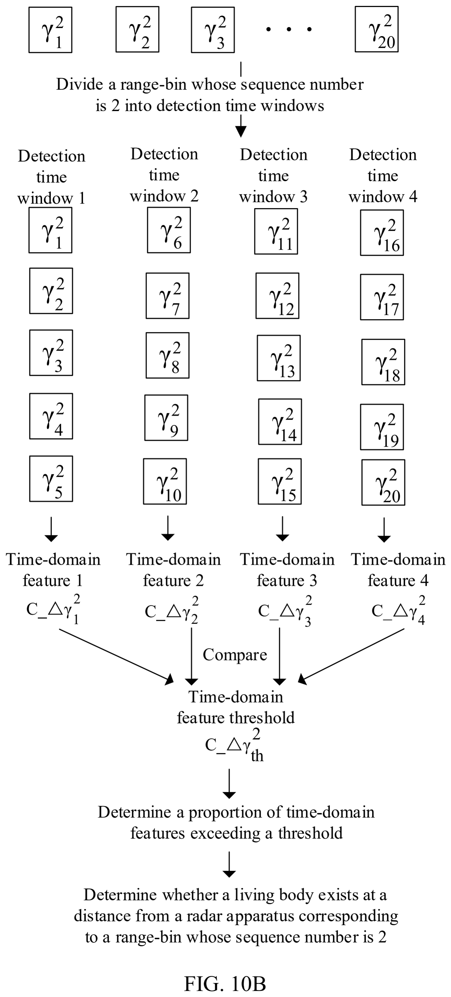

In some embodiments, the in-vehicle infotainment system SOC 107 may divide all range-bins into different detection time windows, to obtain amplitudes and phases of the range-bins in the different windows. FIG. 10B is a schematic flowchart of determining, by using a time-domain feature, whether a living body exists at a distance from a radar apparatus corresponding to a range-bin whose sequence number is 2 according to an embodiment of this application. As shown in FIG. 10B, an example in which a range-bin whose sequence number is 2 corresponds to a target at a distance from the radar apparatus is used. When the range resolution is 0.6 m, a range-bin with i=2 in each frame of range-bin set may correspond to a target that is 1.2 m away from the radar apparatus. The in-vehicle infotainment system SOC 107 may extract range-bins with i=2 in all frames, to obtain changes of an amplitude value of an intermediate-frequency signal corresponding to a target whose distance is 1.2 m in the $H^{th}$ frame. For example, the in-vehicle infotainment system SOC 107 may use five frames as one window, and divide range-bins with i=2 in the range-bin set of all frames into different windows. In this case, a size of the detection time window is T=5. For example, when the range-bin set has 20 frames in total, H=20. Range-bins with i=2 in the range-bin sets from a first frame to a fifth frame may be divided into a detection time window 1. Range-bins with i=2 in the range-bin sets from a sixth frame to a tenth frame may be divided into a detection time window 2. Range-bins with i=2 in the range-bin sets from an eleventh frame to a fifteenth frame may be divided into a detection time window 3. Range-bins with i=2 in the range-bin sets from a sixteenth frame to a twentieth frame may be divided into a detection time window 4. In this case, amplitude values of range-bins in different detection time windows may be represented as $\gamma^2 = [\gamma_{t-T+1}^2, \gamma_{t-T+2}^2, ..., \gamma_t^2]$. When t=5, it corresponds to an amplitude value of a range-bin in the detection time window 1. When t=10, it corresponds to an amplitude value of a range-bin in the detection time window 2. When t=15, it corresponds to an amplitude value of a range-bin in the detection time window 3. When t=20, it corresponds to an amplitude value of a range-bin in the detection time window 4. The in-vehicle infotainment system SOC 107 may further calculate a phase value of a range-bin in each detection time window, where phase values of range-bins in different detection time windows may be represented as $\theta^2 = [\theta_{t-T+1}^2, \theta_{t-T+2}^2, ..., \theta_t^2]$. For meanings of phase values of range-bins in different detection time windows in the foregoing formula, refer to the foregoing descriptions of the formulas for amplitude values of range-bins in different detection time windows. Details are not described herein again.

Similarly, the in-vehicle infotainment system SOC 107 may further divide a range-bin whose i is another value into different windows. For a method for dividing the range-bin window by the in-vehicle infotainment system SOC 107 when i is another value, refer to the method for dividing the range-bin into different windows by the in-vehicle infotainment system SOC 107 when i=2 in the foregoing embodiment. Details are not described herein again.

3. Calculate time-domain features of range-bins in different detection time windows

After calculating the amplitude and the phase of each range-bin, the in-vehicle infotainment system SOC 107 may calculate the time-domain feature of the range-bin. The time-domain feature of the range-bin may include but is not limited to an average and a variance of amplitude differences and an average and a variance of cumulative phase differences.

When a living body exists in the vehicle 100, a distance difference is generated at some positions of the living body due to a small movement such as heart contraction and relaxation of the living body, or breathing. The foregoing distance difference causes changes of in an amplitude and a phase of a range-bin. An amplitude of a range-bin may reflect reflection intensity of a corresponding distance. When an object exists at the corresponding distance, the range-bin amplitude is high. When the target has displacement, the range-bin amplitude changes. However, the phase is very sensitive to a small change in the target position. The phase difference of the intermediate-frequency signal may be expressed as: $\Delta\varphi = 4\pi\Delta d/\lambda$. Herein, $\Delta\varphi$ is a phase change amount of the intermediate-frequency signal. $\Delta d$ is a change amount of a distance between the target and the radar apparatus 110. $\lambda$ is a wavelength of the radar apparatus 110. Using a 77 GHz radar apparatus as an example, a wavelength of the 77 GHz radar apparatus is approximately 4 mm. When $\Delta d = 1$ mm, a phase change amount of the intermediate-frequency signal is $\Delta\varphi = \pi$. It may be understood that, when the change of the distance between the target and the radar apparatus 110 is 1 millimeter, the phase change amount of the intermediate-frequency signal is half a period. Therefore, the in-vehicle infotainment system SOC 107 may determine, by calculating amplitude differences and cumulative phase differences of different range-bins, whether a moving object exists at different monitoring distances in the cabin of the vehicle 100, to determine whether a living object exists at different monitoring distances in the cabin of the vehicle 100.

As shown in FIG. 10B, in some embodiments, the in-vehicle infotainment system SOC 107 may calculate an amplitude difference of a range-bin within the detection time window T. The amplitude difference in the detection time window T may be represented as $\Delta\gamma^i = [\Delta\gamma^i_{t-T+1}, \Delta\gamma^i_{t-T+2}, ..., \Delta\gamma^i_{t-1}]$, where $\Delta\gamma^i_{t-1} = \gamma^i_t - \gamma^i_{t-1}$. Further, the in-vehicle infotainment system SOC 107 may calculate an average of amplitude differences, where a calculation method of the average of the amplitude differences may be:

$$C\_\Delta\gamma^i = (\Delta\gamma^i_{t-T+1} + \Delta\gamma^i_{t-T+2} + \cdots + \Delta\gamma^i_{t-1})/(T-1)$$

. It may be understood that, a distance difference of the movement of the living body causes an amplitude value of the range-bin to change. The in-vehicle infotainment system SOC 107 may calculate a difference between range-bin amplitude values, so that changes in the movement of the living body can be obtained more conveniently. In some cases, the detection of a living body by the radar apparatus 110 is affected. For example, when the vehicle 100 is collided by an external environment, an amplitude value of a range-bin may change greatly. The radar apparatus 110 may calculate an average of amplitude differences within the detection time window T. In this way, an error value during signal acquisition is averaged during averaging calculation, thereby improving accuracy of detecting a living body by the radar apparatus 110.

In a possible implementation, the in-vehicle infotainment system SOC 107 may further calculate a variance of the amplitude differences. A calculation method of the variance of the amplitude differences may be:

$$\sigma\_\Delta\gamma^i = (\Delta\gamma^i_{t-T+1} - C\_\Delta\gamma^i)^2 + (\Delta\gamma^i_{t-T+2} - C\_\Delta\gamma^i)^2 + \cdots + (\Delta\gamma^i_{t-1} - C\_\Delta\gamma^i)^2)/(T-1)$$

. The variance of the amplitude differences of the range-bin may reflect stability of the amplitude differences of the range-bin, and the variance changes significantly only when there is continuous living body motion in the vehicle 100. Therefore, the in-vehicle infotainment system SOC 107 may convert the range-bin amplitude difference into an average or a variance, to eliminate impact of living body detection accuracy in a specific case.

In some embodiments, the in-vehicle infotainment system SOC 107 may calculate a phase difference value of a range-bin within the detection time window T, and then perform accumulation based on positiveness and negativeness of the cumulative phase difference to obtain the cumulative phase difference. A calculation method of the cumulative phase difference may be $\Delta\theta^i = [\Delta\theta^i_{t-T+1}, \Delta\theta^i_{t-T+2}, ..., \Delta\theta^i_{t-1}]$, where $\Delta\theta^i_{t-1} = \Delta\theta^i_{t-2} + (\theta^i_t - \theta^i_{t-1})$, and $\Delta\theta^i_1 = (\theta^i_2 - \theta^i_1)$. The phase value ranges from $-\pi$ to $\pi$. When the value of the cumulative phase difference $\theta^i_t - \theta^i_{t-1}$ is greater than $\pi$, the in-vehicle infotainment system SOC 107 may subtract $2\pi$ from the cumulative phase difference. When the value of the cumulative phase difference $\theta_t^i - \theta_{t-1}^i$ is less than $-\pi$, the in-vehicle infotainment system SOC 107 may add $2\pi$ to the cumulative phase difference to implement phase spreading. Then, the in-vehicle infotainment system SOC 107 may calculate an average of the foregoing cumulative phase differences, where a method for calculating the average of the cumulative phase differences may be: $C\_\Delta\theta^i = (\Delta\theta_{t-T+1}^i + \Delta\theta_{t-T+2}^i + \cdots + \Delta\theta_{t-1}^i)/(T-1)$ . In a possible implementation, the in-vehicle infotainment system SOC 107 may further calculate a variance of the cumulative phase differences. A calculation method of the variance of the cumulative phase differences may be:

$$\sigma\_\Delta\theta^i = (\Delta\theta_{t-T+1}^i - C\_\Delta\theta^i)^2 + (\Delta\theta_{t-T+2}^i - C\_\Delta\theta^i)^2 + \cdots + (\Delta\theta_{t-1}^i - C\_\Delta\theta^i)^2)/(T-1)$$ .

4. Determine a living body based on a time-domain feature

In some embodiments, the in-vehicle infotainment system SOC 107 may determine, based on the time-domain feature of the range-bin, whether a living body exists in the cabin monitoring range. The in-vehicle infotainment system 101 may store one or more of a threshold $C\_\Delta\gamma_{th}^i$ of a range-bin amplitude difference average, a threshold $\sigma\_\Delta\gamma_{th}^i$ of a range-bin amplitude difference variance, a threshold $C\_\Delta\theta_{th}^i$ of a range-bin cumulative phase difference average, and a threshold $\sigma\_\Delta\theta_{th}^i$ of a range-bin cumulative phase difference variance. The foregoing threshold is a threshold for presence of a living body in the detection area of the vehicle 100. The threshold may be obtained by using a method such as machine learning. When the time-domain feature is greater than the corresponding threshold, it indicates that a living body exists in the current detection. For example, when $C\_\Delta\theta_t^i > C\_\Delta\theta_{th}^i$, it indicates that a living body exists at a position with a distance from the radar apparatus 110 corresponding to range-bin=i at a moment t. The in-vehicle infotainment system may count a quantity of times that the time-domain feature is greater than a respective threshold within the detection time, and calculate a proportion of the quantity of effective counts in the total quantity of counts. For example, the in-vehicle infotainment system SOC 107 may select the range-bin amplitude difference average and cumulative phase difference average as a determining basis.

As shown in FIG. 10B, the in-vehicle infotainment system SOC 107 may calculate time-domain features in four detection time windows. A time-domain feature obtained by a range-bin in the detection time window 1 may be denoted as a time-domain feature 1. The time-domain feature 1 may be an amplitude difference average $C\_\Delta\gamma_1^2$ of range-bins corresponding to the first frame to the fifth frame. A superscript of the amplitude difference average $C\_\Delta\gamma_1^2$ is a sequence number i=2 of the range-bins in the range-bin set. A subscript of $C\_\Delta\gamma_1^2$ may represent a sequence number of the detection time window. In this case, the in-vehicle infotainment system SOC 107 may obtain amplitude difference averages corresponding to the four detection time windows. The in-vehicle infotainment system SOC 107 may separately compare the amplitude difference averages corresponding to the four detection time windows with a threshold of the thresholds $C\_\Delta\gamma_{th}^2$ of the range-bin amplitude difference averages, and calculate a quantity of amplitude difference averages that correspond to the four detection time windows and that are greater than the threshold of the thresholds $C\_\Delta\gamma_{th}^2$ of the range-bin amplitude difference averages. Further, the in-vehicle infotainment system SOC 107 may calculate a percentage of a quantity of times that the amplitude difference average is greater than the threshold of the amplitude difference average in a total quantity of counts (4 times). In some embodiments, the in-vehicle infotainment system SOC 107 may determine that when a proportion of a quantity of counts that a time-domain feature is greater than a respective threshold in a total quantity of counts exceeds a specific proportion, a living body exists in the monitoring range of the cabin of the vehicle 100. For example, if the threshold is 10%, and one of the amplitude difference averages corresponding to the four detection time windows exceeds the threshold, that is, a percentage of a quantity of times that the amplitude difference average is greater than the threshold of the amplitude difference average in the total quantity of counts is 25%. Because 25%>10%, and the average of the amplitude differences corresponds to the range-bin with i=2, the in-vehicle infotainment system SOC 107 may determine that a living body exists at a position that is 1.2 m away from the radar apparatus 110. For another method for determining a living body at a monitoring distance, refer to the method for determining a living body at a position 1.2 m away from the radar apparatus in the foregoing embodiment. Details are not described herein again.

In some embodiments, the in-vehicle infotainment system SOC 107 may determine, when the time-domain feature of the range-bin is slightly greater than the threshold only for a relatively short monitoring distance and is greater than a time-domain feature of the range-bin for another monitoring distance, that no living body exists in the vehicle 100. For example, the in-vehicle infotainment system SOC 107 may determine, when the average of amplitude differences of range-bins when i=0 and i=1 is slightly greater than the threshold, and when the average of amplitude differences of range-bins when i=0 and i=1 is greater than the average of amplitude differences of range-bins when i=2, i=3, and i=4, that no living body exists in the vehicle 100. In this way, a false alarm caused by the shake of the ornament or the shake of the surroundings of the vehicle can be excluded.

The in-vehicle infotainment system SOC 107 may select one or more of an amplitude difference average $C\_\Delta\gamma^i$, an amplitude difference variance $\sigma\_\Delta\gamma^i$, a cumulative phase difference average $C\_\Delta\theta^i$, and a cumulative phase difference variance $\sigma\_\Delta\theta^i$ as a basis for determining whether a living body exists in the monitoring range of the cabin of the vehicle 100. For a method in which the in-vehicle infotainment system SOC selects another time-domain feature to determine whether a living body exists in the cabin monitoring range, refer to the method in which the amplitude difference average $C\_\Delta\gamma^i$ and the cumulative phase difference average $C\_\Delta\theta^i$ are selected to determine whether a living body exists in the cabin monitoring range in the foregoing embodiment. Details are not described herein again.

In some embodiments, the in-vehicle infotainment system may obtain different time-domain features, to obtain proportions of different time-domain features that exceed corresponding thresholds. Further, the in-vehicle infotainment system SOC 107 may determine that a living body exists at the monitoring distance, when it is determined, based on all time-domain features, that a living body exists at the monitoring distance. For example, the in-vehicle infotainment system SOC 107 may obtain an amplitude difference average and an amplitude difference variance of range-bins in different detection time windows when i=2, and separately calculate a proportion of a quantity of counts that the amplitude difference average is greater than its threshold in the total quantity of counts, and a proportion of a quantity of counts that the amplitude difference variance is greater than its threshold in the total quantity of counts. When the proportion of the counts that the amplitude difference average is greater than its threshold in the total quantity of counts exceeds a proportion A, and the proportion of counts that the amplitude difference variance is greater than its threshold in the total quantity of counts exceeds a proportion B, it may be determined that a living body exists at the monitoring distance. Values of the proportion A and the proportion B may be the same or different.

In some other embodiments, the in-vehicle infotainment system SOC 107 may obtain different time-domain features, and calculate a total proportion of all time-domain features that exceed a corresponding threshold. Further, the in-vehicle infotainment system SOC 107 may determine, when the total proportion exceeds a proportion, that a living body exists at the monitoring distance. For example, the in-vehicle infotainment system SOC 107 may obtain amplitude difference averages and amplitude difference variances of range-bins in different detection time windows when i=2. The in-vehicle infotainment system SOC 107 may calculate a first sum of the quantity of counts that the amplitude difference average is greater than its threshold and the quantity of counts that the amplitude difference variance is greater than its threshold, and a second sum of the amplitude difference average and the amplitude difference variance, and calculate a proportion of the first sum in the second sum. When the foregoing proportion exceeds a specific proportion, the in-vehicle infotainment system SOC 107 may determine that a living body exists at the monitoring distance.

In some embodiments, the in-vehicle infotainment system SOC 107 may further determine, based on the frequency-domain feature of the range-bin, whether a living body exists in the vehicle 100. This may specifically include the following several steps:

1. Calculate an amplitude and a phase of a range-bin.
2. Divide different detection time windows.
   The in-vehicle infotainment system SOC 107 may calculate an amplitude and a phase of a range-bin in each range-bin set obtained from the central control display 102. In addition, the in-vehicle infotainment system SOC 107 may divide all range-bins into different detection time windows, to obtain amplitudes and phases of the range-bins in the different windows. For a method for obtaining the range-bin amplitude and phase by the in-vehicle infotainment system SOC 107 and a method for dividing all the range-bins into different detection time windows, refer to the description in the foregoing embodiment. Details are not described herein again.
3. Calculate frequency-domain features of range-bins in different detection time windows.
   In some embodiments, the in-vehicle infotainment system SOC 107 may calculate a frequency-domain feature of the range-bin. After calculating the amplitude difference $\Delta\gamma^i$ or the cumulative phase difference $\Delta\theta^i$ of the range-bin, the in-vehicle infotainment system SOC 107 may perform FFT computation on the amplitude difference $\Delta\gamma^i$ or the cumulative phase difference $\Delta\theta^i$. For a calculation method of the amplitude difference $\Delta\gamma^i$ or the cumulative phase difference $\Delta\theta^i$, refer to the description in the foregoing embodiment. Details are not described herein again. A result obtained by performing the FFT computation on the amplitude difference $\Delta\gamma^i$ is denoted as $fft\_\Delta\gamma^i$, and a result obtained by performing the FFT computation on the cumulative phase difference $\Delta\theta^i$ is denoted as $fft\_\Delta\theta^i$. $fft\_\Delta\gamma^i$ can reflect the change frequency of the amplitude during the motion of the living body. $fft\_\Delta\theta^i$ can reflect the change frequency of the phase during the motion of the living body.
4. Determine a living body based on a frequency-domain feature.

In some embodiments, the in-vehicle infotainment system SOC 107 may determine, based on the frequency-domain feature of the range-bin, whether a living body exists in the cabin monitoring range. The in-vehicle infotainment system SOC 107 may determine, based on fft_$\Delta\gamma^i$, an amplitude change frequency caused by the target motion, and the in-vehicle infotainment system SOC 107 may determine, based on fft_$\Delta\theta^i$, a phase change frequency caused by the target motion. When the frequency-domain feature exceeds a corresponding threshold at a change frequency, the in-vehicle infotainment system SOC 107 may determine that a living body exists in the monitoring range of the cabin of the vehicle 100. The in-vehicle infotainment system 101 may store the threshold of the frequency-domain feature. When the frequency-domain feature is greater than a corresponding threshold, it indicates that a living body exists in the current detection. The threshold of the amplitude difference frequency fft_$\Delta\gamma^i$ may be denoted as $\text{fft\_}\Delta\gamma^i_{th}$. The threshold of the phase difference frequency fft_$\Delta\theta^i$ may be denoted as $\text{fft\_}\Delta\theta^i_{th}$. The in-vehicle infotainment system SOC 107 may determine a quantity of counts that the frequency-domain feature is greater than a corresponding threshold, and calculate a proportion of a quantity of counts that the frequency-domain feature is greater than a respective threshold to a total quantity of counts. In some embodiments, the in-vehicle infotainment system SOC 107 may determine that when a proportion of a quantity of counts that a frequency-domain feature is greater than a respective threshold in a total quantity of counts exceeds a specific threshold, a living body exists in the monitoring range of the cabin of the vehicle 100.

In a possible implementation, because a human heartbeat frequency is between 0.8 Hz and 2 Hz, the in-vehicle infotainment system SOC 107 may select, by using a band-pass filter, an amplitude value in a range of 0 Hz to 2 Hz in fft_$\Delta\gamma^i$ and/or fft_$\Delta\theta^i$ to perform threshold determining. In this way, a computational amount can be reduced, interference can be eliminated, and accuracy of living body detection can be improved. The in-vehicle infotainment system SOC 107 may further select another frequency of the living body motion from the frequency-domain feature, to detect the living body in the monitoring range of the vehicle cabin. In embodiments of this application, when the in-vehicle infotainment system determines the living body by using the frequency-domain feature, a selected frequency is not limited. For a method for determining, by the in-vehicle infotainment system SOC 107 based on the range-bin frequency-domain feature, whether a living body exists in the cabin monitoring range, refer to the method for determining, based on the range-bin time-domain feature, whether a living body exists in the cabin monitoring range in the foregoing embodiment. Details are not described herein again.

In some other embodiments, the in-vehicle infotainment system SOC 107 may further determine, through machine learning, whether a living body exists in the vehicle 100. For example, the in-vehicle infotainment system SOC 107 may input the time-domain feature and/or the frequency-domain feature into a binary classifier (for example, a multilayer perceptron), and output, through the binary classifier, whether a living body exists in the monitoring range of the cabin of the vehicle 100. In a possible implementation, the in-vehicle infotainment system SOC 107 may perform feature fusion on the time-domain feature and the frequency-domain feature. The feature fusion method herein may include a concatenation (concat) method, an addition (add) method, or another feature fusion method. The in-vehicle infotainment system SOC 107 may input a time-frequency domain fused feature into the binary classifier. The binary classifier (which may also be referred to as a binary classification network) herein may be a fully-connected network, and an activation function of the fully-connected network may include a sigmoid function and another activation function (for example, a tanh function, a relu function, and a softmax function). A loss function of the fully-connected network may include a cross-entropy (cross-entropy) loss function and another loss function (for example, a hinge loss function, a logistic loss function, and an exponential loss function). The binary classifier may be obtained by training on one or more of a time-domain feature, a frequency-domain feature, and a time-frequency domain fused feature when a living body exists and no living body exists in the cabin monitoring range of the plurality of vehicles 100. When the binary classifier outputs 0, the computer device may determine that no living body exists in the cabin monitoring range of the vehicle 100; or when the binary classifier outputs 1, the computer device may determine that a living body exists in the cabin monitoring range of the vehicle 100.

It may be understood that the in-vehicle infotainment system SOC 107 may further include another classification network, configured to determine, based on a time-domain feature and a frequency-domain feature of the range-bin, whether a living body exists in the vehicle 100. In embodiments of this application, a classification network type that is in the in-vehicle infotainment system SOC 107 and that is configured to determine whether a living body exists in the vehicle 100 is not limited.

S609: The in-vehicle infotainment system 101 sends living body leaving-behind information to the electronic device 120.

After determining that a living body exists in the monitoring range of the cabin of the vehicle 100, the in-vehicle infotainment system SOC 107 may send living body leaving-behind information to the electronic device 120. The electronic device 120 may be a device such as a mobile phone, a computer, a bracelet, or a watch of a vehicle owner. A type of the electronic device 120 is not limited in embodiments of this application.

In some embodiments, the electronic device 120 may include a display. After receiving the living body leaving-behind information sent by the in-vehicle infotainment system 101, the electronic device 120 may display prompt information on the display. The foregoing prompt information may be text information "Child left in the vehicle" that is displayed on the display. In a possible implementation, the electronic device 120 may further include a motor. After the electronic device 120 receives the living body leaving-behind information sent by the in-vehicle infotainment system 101, the motor in the electronic device 120 may vibrate, to prompt the user to view the text information displayed on the display.

In some other embodiments, the electronic device 120 may include a speaker. In this way, after the electronic device 120 receives the living body leaving-behind information sent by the in-vehicle infotainment system 101, the speaker of the electronic device 120 may play a voice prompt. The content of the voice prompt may be "Child left in the vehicle". The speaker of the electronic device 120 may repeatedly play the voice prompt until an instruction for stopping the voice prompt from the user is received.

It may be understood that, when detecting that a living body exists in the vehicle 100, the in-vehicle infotainment system 101 may send the living body leaving-behind information to the electronic device 120 of the vehicle owner. In this way, even if the vehicle owner has left the vehicle, the vehicle owner may obtain information about a living body left in the vehicle 100, and view the information in the vehicle 100 in time, to ensure life safety of the living body in the vehicle 100.

According to the living body detection method provided in this embodiment of this application, when receiving one or more of a door closing signal, a turn-off signal, a window closing signal, a fuel filler port closing signal, and a charging port closing signal, the in-vehicle infotainment system 101 in the vehicle 100 may detect whether a living body exists in a cabin monitoring range of the vehicle 100. In this way, whether a living body exists in the vehicle can be detected in time when the vehicle owner leaves the vehicle 100. The in-vehicle infotainment system performs living body detection after receiving one or more of the door closing signal, the turn-off signal, the vehicle window closing signal, the fuel filler port closing signal, and the charging port closing signal, to effectively avoid interference caused by pedestrian walking outside the vehicle to living body detection accuracy, and avoid living body detection performed when the vehicle owner only temporarily leaves the vehicle. After receiving the foregoing signal, the in-vehicle infotainment system 101 may wait a first time period and then start the living body detection, or after the in-vehicle infotainment system 101 sends the living body detection instruction to the central control display, the central control display waits a second time period and then instructs the radar apparatus to start to transmit the radar signal and receive the echo signal. In this way, impact of shaking of the internal decoration of the vehicle 100 on accuracy of living body detection can be reduced.

The radar apparatus in the vehicle 100 may be integrated into the central control display 102, so that cabling can be reduced, and a change in a monitoring range caused by a loose fixed point of the radar apparatus is avoided. The radar apparatus may perform frequency mixing on the transmitted radar signal and echo signal to obtain an intermediate-frequency signal. The central control display MCU may perform selection on the intermediate-frequency signal in a distance dimension and a time dimension, and then send the intermediate-frequency signal to the in-vehicle infotainment system SOC, to resolve a problem that a data transmission amount is limited when the central control display MCU sends data to the in-vehicle infotainment system SOC. In addition, the display sends the range-bins to the in-vehicle infotainment system, and the in-vehicle infotainment system performs living body detection by using a distributed processing method, which can reduce a requirement for computing power of the display MCU. Even if the display MCU has low computing power, the vehicle 100 may also perform living body detection.

Finally, the in-vehicle infotainment system SOC may determine, based on the received data, whether a living body exists in the monitoring range of the cabin of the vehicle 100. The in-vehicle infotainment system SOC may obtain a time-domain feature, a frequency-domain feature, or a machine learning method of the received range-bin data to determine whether a living body exists in the vehicle. The time-domain feature of the range-bin data obtained by the in-vehicle infotainment system SOC may be one or more of an average of range-bin amplitude differences, a variance of range-bin amplitude differences, an average of cumulative phase differences, and a variance of cumulative phase differences. In this way, not only false alarms generated due to interference such as sudden shaking of the vehicle body can be avoided, but also small displacement of the living body within the monitoring range of the cabin, such as movement of the chest cavity, can be effectively detected.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on the computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in embodiments may be implemented by a computer program instructing related hardware. The program may be stored in a computer-readable storage medium. The program, when executed, may include the procedures of the foregoing method embodiments. The foregoing storage medium includes any medium that can store program code, such as a ROM, a random access memory RAM, a magnetic disk, or an optical disc.

**Claims**

1. A living body detection method, wherein the method is applied to a vehicle, the vehicle comprises a display device and a first device, the display device comprises a radar apparatus, and the method comprises:

    transmitting, by the vehicle, a radar signal by using the radar apparatus, and receiving an echo signal;
    obtaining, by the display device in the vehicle, N1 frames of intermediate-frequency signals based on the radar signal and the echo signal, wherein one of the N1 frames of intermediate-frequency signals comprises N2 intermediate-frequency signals, one of the N2 intermediate-frequency signals is obtained based on one radar signal transmitted by the radar apparatus and an echo signal of the radar signal, and both N1 and N2 are positive integers;
    obtaining, by the display device in the vehicle, first data based on M intermediate-frequency signals of the N1 frames of intermediate-frequency signals, wherein M is a positive integer less than N1*N2, and the first data comprises amplitudes and/or phases, in frequency domain, of the M intermediate-frequency signals;
    sending, by the display device in the vehicle, the first data to the first device; and
    determining, by the first device in the vehicle based on the first data, that a living body exists in the vehicle.

2. The living body detection method according to claim 1, wherein obtaining, by the display device in the vehicle, the first data based on the M intermediate-frequency signals of the N1 frames of intermediate-frequency signals specifically comprises:

    selecting, by the display device in the vehicle, the M intermediate-frequency signals from the N1 frames of intermediate-frequency signals; and
    performing, by the display device in the vehicle, a Fourier transform on the M intermediate-frequency signals to obtain the first data.

3. The living body detection method according to claim 1, wherein obtaining, by the display device in the vehicle, the first data based on the M intermediate-frequency signals of the N1 frames of intermediate-frequency signals specifically comprises:

    obtaining, by the display device in the vehicle, second data based on the M intermediate-frequency signals, wherein the second data comprises an amplitude and/or a phase, in frequency domain, of an intermediate-frequency signal that is of the M intermediate-frequency signals and that is obtained based on an echo signal reflected within a first monitoring range; and
    obtaining, by the display device in the vehicle, the first data through selection from the second data, wherein the first data comprises an amplitude and/or a phase, in frequency domain, of an intermediate-frequency signal that is of the M intermediate-frequency signals and that is obtained based on an echo signal reflected within a second monitoring range, and the second monitoring range is smaller than the first monitoring range.

4. The living body detection method according to any one of claims 1 to 3, wherein determining, by the first device in the vehicle based on the first data, that a living body exists in the vehicle specifically comprises:

obtaining, by the first device in the vehicle, third data through selection from the first data, wherein the third data comprises an amplitude and/or a phase, in frequency domain, of an intermediate-frequency signal that is obtained based on an echo signal reflected at a first position, and the first position is a position at a first distance from the radar apparatus;

grouping, by the first device in the vehicle, the third data to obtain Q groups of data, wherein Q is a positive integer;

calculating, by the first device in the vehicle, feature values of the Q groups of data;

determining, by the first device in the vehicle, that a proportion of feature values that are greater than corresponding thresholds in the feature values of the Q groups of data exceeds a first proportion; and

determining, by the first device in the vehicle, that a living body exists at the first position.

5. The living body detection method according to claim 4, wherein calculating, by the first device in the vehicle, the feature values of the Q groups of data specifically comprises:

calculating, by the first device in the vehicle, amplitude differences of each of Q groups of first data to obtain the amplitude differences; and calculating, by the first device, an average and/or a variance of the amplitude differences; and/or

calculating, by the first device in the vehicle, cumulative phase differences of each of the Q groups of first data to obtain the cumulative phase differences; and calculating, by the first device, an average and/or a variance of the cumulative phase differences.

6. The living body detection method according to claim 4, wherein calculating, by the first device in the vehicle, the feature values of the Q groups of data specifically comprises:

calculating, by the first device in the vehicle, amplitude differences of each of Q groups of first data to obtain the amplitude differences; and obtaining, by the first device, frequency-domain features of the amplitude differences; and/or

calculating, by the first device in the vehicle, cumulative phase differences of each of the Q groups of first data to obtain the cumulative phase differences; and obtaining, by the first device, frequency-domain features of the cumulative phase differences.

7. The living body detection method according to any one of claims 1 to 6, wherein before transmitting, by the vehicle, the radar signal by using the radar apparatus, and receiving the echo signal, the method comprises:

determining, by the first device in the vehicle, that one or more of a door, a window, an engine, a fuel filler port, and a charging port of the vehicle are closed; and

sending, by the first device in the vehicle, a first signal to the display device, wherein the first signal indicates the radar apparatus to transmit the radar signal.

8. The living body detection method according to claim 7, wherein sending, by the first device in the vehicle, the first signal to the display device specifically comprises:

after determining that one or more of the door, the window, the engine, the fuel filler port, and the charging port of the vehicle are closed, sending, by the first device in the vehicle, the first signal to the display device after waiting a first time period; or

after sending, by the first device in the vehicle, the first signal to the display device, the method further comprises: after waiting a second time period, indicating, by the display device in the vehicle, the radar apparatus to transmit the radar signal and receive the echo signal.

9. The living body detection method according to any one of claims 1 to 8, wherein after determining, by the first device in the vehicle based on the first data, that a living body exists in the vehicle, the method further comprises:

sending, by the first device in the vehicle, first information to an electronic device, wherein the first information indicates that a living body exists in the vehicle.

10. The living body detection method according to any one of claims 1 to 9, wherein the first device is an in-vehicle infotainment system.

11. A vehicle, wherein the vehicle comprises a display device, a memory, and a processor; the display device is configured to display an interface, the display device comprises a radar apparatus, and the radar apparatus is configured to transmit a radar signal and receive an echo signal; the memory stores computer executable instructions; and when the processor executes the computer executable instructions, the vehicle is enabled to implement the method according to any one of claims 1 to 10.

12. A computer-readable storage medium, comprising instructions, wherein when the instructions are run on a vehicle, the vehicle is enabled to perform the method according to any one of claims 1 to 10.

FIG. 1

Vehicle 100

Central control display 102

Central control display MCU 109

Deserializer 108

Radar apparatus 110

In-vehicle infotainment system 101

Serializer 106

Communication module 105

In-vehicle infotainment system SOC 107

Vehicle body control system 103

Engine 104

Electronic device 120

Child left in the vehicle!

**Vehicle 100**

FIG. 2

Electronic device 120

Antenna 1             Antenna 2

| Mobile communication module 2G/3G/4G/5G [350] | Wireless communication module BT/WLAN/GNSS/NFC/IR/FM [360] |

| Motor [380] | | Speaker [370A] |
| Displays 1 to N [390] | | Receiver [370B] |
| Internal memory [321] | Processor [310] | Audio module [370] | Microphone [370C] |
| Interface for external memory [320] | | Headset jack [370D] |

| USB interface [330] | Charging management module [340] | Power management module [341] |
| Charging input | | Battery [342] |

FIG. 3

Central control display 102

FIG. 4A

Central control display 102

FIG. 4B

FIG. 5A

FIG. 5B

FIG. 5C

FIG. 5D

| In-vehicle infotainment system 101 | Vehicle body control system 103 | Engine 104 | Central control display 102 / Radar apparatus 110 | Electronic device 120 |

S601: Receive a door closing signal

S602: Receive a turn-off signal

S603: Send a living body detection instruction

S604: Start a radar apparatus

S605: The radar apparatus transmits a radar signal, receives an echo signal, and generates an intermediate-frequency signal based on the transmitted radar signal and the echo signal

S606: Process the intermediate-frequency signal

S607: Send a processed intermediate-frequency signal

S608: Determine, based on the processed intermediate-frequency signal, that a living body exists in a vehicle

S609: Send living body leaving-behind information

FIG. 6

Radar data cube 700

z: Sequence
number of an
intermediate-
frequency
signal
sampling
point

y: Sequence
number of a
receive
channel

x: Sequence number of an
intermediate-frequency signal

FIG. 7A

Radar data cube 710

z: Distance from a radar apparatus

y: Sequence number of a receive channel

x: Sequence number of an intermediate-frequency signal

FIG. 7B

Amplitude

0    1    2    3    4    Range-bin

FIG. 8A

Amplitude — Truncated portion ┆ Deleted portion

0      4 ┆     Range-bin

**FIG. 8B**

Radar data block plane 810

Deleted portion

z: Distance from a radar apparatus

Truncated portion

x: Sequence number of an intermediate-frequency signal

**FIG. 8C**

First frame          Second frame

Amplitude
Range-bin

Time

Select          Select

FIG. 9A

Radar data block plane 910

z: Distance
from a radar
apparatus

Select

x: Sequence number of an intermediate-frequency signal

FIG. 9B

FIG. 9C

Example diagram 1000 of
amplitude value data blocks

FIG. 10A

$$\boxed{\gamma^2_1} \quad \boxed{\gamma^2_2} \quad \boxed{\gamma^2_3} \quad \cdot \ \cdot \ \cdot \quad \boxed{\gamma^2_{20}}$$

Divide a range-bin whose sequence number
is 2 into detection time windows

| Detection time window 1 | Detection time window 2 | Detection time window 3 | Detection time window 4 |
|:---:|:---:|:---:|:---:|
| $\boxed{\gamma^2_1}$ | $\boxed{\gamma^2_6}$ | $\boxed{\gamma^2_{11}}$ | $\boxed{\gamma^2_{16}}$ |
| $\boxed{\gamma^2_2}$ | $\boxed{\gamma^2_7}$ | $\boxed{\gamma^2_{12}}$ | $\boxed{\gamma^2_{17}}$ |
| $\boxed{\gamma^2_3}$ | $\boxed{\gamma^2_8}$ | $\boxed{\gamma^2_{13}}$ | $\boxed{\gamma^2_{18}}$ |
| $\boxed{\gamma^2_4}$ | $\boxed{\gamma^2_9}$ | $\boxed{\gamma^2_{14}}$ | $\boxed{\gamma^2_{19}}$ |
| $\boxed{\gamma^2_5}$ | $\boxed{\gamma^2_{10}}$ | $\boxed{\gamma^2_{15}}$ | $\boxed{\gamma^2_{20}}$ |

| Time-domain feature 1 | Time-domain feature 2 | Time-domain feature 3 | Time-domain feature 4 |
|:---:|:---:|:---:|:---:|
| $C\_\triangle\gamma^2_1$ | $C\_\triangle\gamma^2_2$ | $C\_\triangle\gamma^2_3$ | $C\_\triangle\gamma^2_4$ |

Compare

Time-domain
feature threshold
$$C\_\triangle\gamma^2_{th}$$

Determine a proportion of time-domain
features exceeding a threshold

Determine whether a living body exists at a
distance from a radar apparatus corresponding
to a range-bin whose sequence number is 2

FIG. 10B

## INTERNATIONAL SEARCH REPORT

| | International application No. |
|---|---|
| | **PCT/CN2024/073424** |

**A. CLASSIFICATION OF SUBJECT MATTER**

G01S13/88(2006.01)i

According to International Patent Classification (IPC) or to both national classification and IPC

**B. FIELDS SEARCHED**

Minimum documentation searched (classification system followed by classification symbols)

IPC:G01S,B60Q

Documentation searched other than minimum documentation to the extent that such documents are included in the fields searched

Electronic data base consulted during the international search (name of data base and, where practicable, search terms used)

CNTXT, VEN, ENTXT, CNABS, DWPI, CNKI, 读秀, DUXIU: 活体, 检测, 显示, 雷达, 信号, 频率, 发射, 接受, living body, detect, vehicle, trigger, radar, determine, position, scatter, frequency, wave, reflect, calculat, signal, data

**C. DOCUMENTS CONSIDERED TO BE RELEVANT**

| Category* | Citation of document, with indication, where appropriate, of the relevant passages | Relevant to claim No. |
|---|---|---|
| X | CN 113805165 A (WEIFU HIGH-TECHNOLOGY GROUP CO., LTD.) 17 December 2021 (2021-12-17) description, specific embodiments, and figures 1-3 | 1-12 |
| X | CN 111856592 A (JIANGXI SENSEFREEDOM TECHNOLOGY CO., LTD.) 30 October 2020 (2020-10-30) description, specific embodiments, and figures 1-10 | 1-12 |
| X | CN 109375215 A (SHENZHEN ECL TECHNOLOGY CO., LTD.) 22 February 2019 (2019-02-22) description, specific embodiments, and figures 1-8 | 1-12 |
| A | CN 112782684 A (SHENZHEN UNIVERSITY) 11 May 2021 (2021-05-11) entire document | 1-12 |
| A | CN 108216104 A (YANG YIMIN) 29 June 2018 (2018-06-29) entire document | 1-12 |
| A | CN 111391753 A (HANGZHOU HANGYUN ELECTRIC APPLIANCE CO., LTD.) 10 July 2020 (2020-07-10) entire document | 1-12 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 March 2024** | **07 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/073424**

**C.    DOCUMENTS CONSIDERED TO BE RELEVANT**

| Category* | Citation of document, with indication, where appropriate, of the relevant passages | Relevant to claim No. |
|---|---|---|
| A | CN 112272779 A (IEE INTERNATIONAL ELECTRONICS & ENGINEERING S.A.) 26 January 2021 (2021-01-26)<br>entire document | 1-12 |
| A | CN 212540743 U (JIANGXI SENSEFREEDOM TECHNOLOGY CO., LTD.) 12 February 2021 (2021-02-12)<br>entire document | 1-12 |
| A | US 2011025546 A1 (RAYTHEON COMPANY) 03 February 2011 (2011-02-03)<br>entire document | 1-12 |
| A | US 2020341114 A1 (STANFORD RESEARCH INSTITUTE INTERNATION) 29 October 2020 (2020-10-29)<br>entire document | 1-12 |
| A | US 5798728 A (MITSUBISHI ELECTRIC CORP.) 25 August 1998 (1998-08-25)<br>entire document | 1-12 |

Form PCT/ISA/210 (second sheet) (July 2022)

INTERNATIONAL SEARCH REPORT
Information on patent family members

International application No.

**PCT/CN2024/073424**

| Patent document cited in search report | | | Publication date (day/month/year) | Patent family member(s) | | | Publication date (day/month/year) |
|---|---|---|---|---|---|---|---|
| CN | 113805165 | A | 17 December 2021 | None | | | |
| CN | 111856592 | A | 30 October 2020 | None | | | |
| CN | 109375215 | A | 22 February 2019 | None | | | |
| CN | 112782684 | A | 11 May 2021 | None | | | |
| CN | 108216104 | A | 29 June 2018 | None | | | |
| CN | 111391753 | A | 10 July 2020 | None | | | |
| CN | 112272779 | A | 26 January 2021 | EP | 3803451 | A1 | 14 April 2021 |
| | | | | EP | 3803451 | B1 | 28 June 2023 |
| | | | | US | 2021245763 | A1 | 12 August 2021 |
| | | | | US | 11230293 | B2 | 25 January 2022 |
| | | | | WO | 2019238575 | A1 | 19 December 2019 |
| CN | 212540743 | U | 12 February 2021 | None | | | |
| US | 2011025546 | A1 | 03 February 2011 | WO | 2011017371 | A1 | 10 February 2011 |
| | | | | WO | 2011017371 | A8 | 01 March 2012 |
| | | | | US | 8169362 | B2 | 01 May 2012 |
| | | | | EP | 2462462 | A1 | 13 June 2012 |
| | | | | EP | 2462462 | B1 | 11 December 2013 |
| | | | | IL | 217908 | A0 | 29 March 2012 |
| US | 2020341114 | A1 | 29 October 2020 | WO | 2018183546 | A1 | 04 October 2018 |
| US | 5798728 | A | 25 August 1998 | JPH | 09145829 | A | 06 June 1997 |

Form PCT/ISA/210 (patent family annex) (July 2022)

**EP 4 647 809 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310149338